# EUROPEAN PATENT APPLICATION

(11) **EP 4 640 093 A1**
(43) Date of publication of application: **29.10.2025**
(21) Application number: 22969154.8
(22) Date of filing: 20.12.2022
(51) Int. Cl.: A24F 40/53

(54) **AEROSOL GENERATION DEVICE AND PROGRAM**

(71) Applicant: Japan Tobacco Inc., Tokyo 105-6927 (JP)
(72) Inventor: MINATO, Junji, Tokyo 130-8603 (JP)
(74) Representative: Hoffmann Eitle
(86) International application number: PCT/JP2022/046881
(87) International publication number: WO 2024/134765

(57) **Abstract**

This aerosol generation device has a control unit, a secondary battery, and a heating unit that heats an aerosol source, wherein the control unit changes a threshold used for determining the presence or absence of a remaining amount with which one unused aerosol source can be fully used, in accordance with a cumulative number of heating cycles from the start of the use of the aerosol generation device.

## Description

### TECHNICAL FIELD

The present invention relates to an aerosol generation device and a program.

### BACKGROUND ART

Aerosol generation devices are devices for generating an aerosol by heating an aerosol source comprising a flavoring or the like, and a secondary battery built into a main body is used as a power source thereof. If the remaining capacity of the secondary battery runs out during heating of the aerosol source, then even if there is still remaining aerosol source that would enable an aerosol to be generated, the user needs to discard the corresponding aerosol source. Accordingly, PTL 1 describes technology for determining that the remaining capacity required to fully use the aerosol source is present, before heating of the aerosol source is started.

### CITATION LIST

### PATENT LITERATURE

PTL 1 WO 2020/084757 A1 Specification

### SUMMARY OF INVENTION

### TECHNICAL PROBLEM

Repeated charging and discharging causes deterioration of the secondary battery, as is well known. In a secondary battery with advanced deterioration, the amount of electricity that can be discharged (i.e., the discharge capacity) from a fully charged state is less than the amount before deterioration starts (i.e., the initial state).

Now, existing aerosol generation devices use a fixed value as a threshold for determining the remaining capacity of the secondary battery. This fixed value is set with no regard to the extent of deterioration of the secondary battery. Therefore, when there is little deterioration, a lack of remaining capacity is sometimes determined even in a state in which one or more unused aerosol sources could still be fully used.

In light of the problem described above, the present disclosure provides technology for increasing the number of aerosol sources that can be fully used with one full charge, in comparison with existing devices.

### SOLUTION TO PROBLEM

One aspect of the present disclosure provides an aerosol generation device comprising a control unit, a secondary battery, and a heating unit for heating an aerosol source, wherein the control unit varies, in accordance with the cumulative number of heating cycles since the start of use of the aerosol generation device, a threshold used to determine whether or not there is remaining capacity enabling one unused aerosol source to be fully used.

The threshold may be increased as the cumulative number increases.

In addition, the threshold may be increased linearly as the cumulative number increases.

An initial value of the threshold may be defined by the remaining capacity enabling the secondary battery in a largely undeteriorated state to generate a guaranteed operating voltage of the aerosol generation device.

The control unit may store the calculated cumulative number in a non-volatile memory unit.

The control unit may vary the threshold in accordance with the total number of aerosol sources replaced after the start of use of the aerosol generation device, the total number corresponding to the cumulative number.

The control unit may vary the threshold in accordance with the cumulative number of charge/discharge cycles of the secondary battery corresponding to the cumulative number.

One aspect of the present disclosure provides a program for causing a computer, which is provided in an aerosol generation device comprising a secondary battery and a heating unit for heating an aerosol source, to implement: a function for varying, in accordance with the cumulative number of heating cycles since the start of use of the aerosol generation device, a threshold used to determine whether or not there is remaining capacity enabling one unused aerosol source to be fully used; a function for determining whether or not the remaining capacity of the secondary battery at the present time is above the threshold; a function for permitting heating of the aerosol source by the heating unit when the remaining capacity of the secondary battery at the present time is above the threshold; and a function for prohibiting heating of the aerosol source by the heating unit when the remaining capacity of the secondary battery at the present time is below the threshold.

### [Effect of the invention]

According to one aspect of the present disclosure, the number of aerosol sources that can be fully used with one full charge can be increased in comparison with existing devices.

### BRIEF DESCRIPTION OF DRAWINGS

Fig. 1 is a diagram in which a front face side of an aerosol generation device is viewed from diagonally above.
Fig. 2 is a diagram in which an upper face of the aerosol generation device is viewed from above.
Fig. 3 is a diagram schematically illustrating the internal configuration of a main body device.
Fig. 4 is a diagram schematically illustrating connection relationships in an electronic circuit of the main body device.
Fig. 5 is a diagram illustrating an example of a control profile used in the aerosol generation device.
Fig. 6 is a diagram illustrating a threshold used to determine whether or not the secondary battery has the remaining capacity needed in order to fully use one unused stick-type substrate.
Fig. 7 is a flowchart illustrating last-stick determination processing performed by the aerosol generation device of Embodiment 1.
Fig. 8 is a flowchart illustrating last-stick determination processing performed by the aerosol generation device of Embodiment 2.
Fig. 9 is a diagram illustrating an example of a table used in step 11.
Fig. 10 is a diagram illustrating a threshold used to determine whether or not the secondary battery has the remaining capacity needed in order to fully use one unused stick-type substrate.
Fig. 11 is a flowchart illustrating last-stick determination processing performed by the aerosol generation device of Embodiment 1.
Fig. 12 is a flowchart illustrating last-stick determination processing performed by the aerosol generation device of Embodiment 4.
Fig. 13 is a diagram illustrating an example of a table used in step 31.
Fig. 14 is a flowchart illustrating last-stick determination processing performed by an aerosol generation device 1 of Embodiment 5.
Fig. 15 is a flowchart illustrating last-stick determination processing performed by an aerosol generation device 1 of Embodiment 6.
Fig. 16 is a diagram illustrating an example of a table used in step 51.
Fig. 17 is a flowchart illustrating last-stick determination processing performed by an aerosol generation device 1 of Embodiment 7.
Fig. 18 is a flowchart illustrating last-stick determination processing performed by an aerosol generation device 1 of Embodiment 8.
Fig. 19 is a diagram illustrating an example of a table used in step 71.
Fig. 20 is a diagram illustrating a threshold used to determine whether or not the secondary battery has the remaining capacity needed in order to fully use one unused stick-type substrate.
Fig. 21 is a diagram illustrating a table for recording a relationship between the cumulative number of charge/discharge cycles and the corresponding last-stick determination threshold.

### DESCRIPTION OF EMBODIMENTS

Embodiments relating to the present disclosure will now be described with reference to the drawings. In the drawings, identical parts are indicated by identical reference signs.

### <Terms>

An aerosol generation device according to each embodiment is a form of electronic cigarette.

In the following description, a substance generated by the aerosol generation device will be referred to as an aerosol. An aerosol refers to a mixture of minute liquid or solid particles suspended in a gas, and air or another gas.

The embodiments describe aerosol generation devices which generate the aerosol without associated burning.

In the following description, the action of a user inhaling the aerosol generated by the aerosol generation device will be referred to as "inhalation" or "a puff".

In each embodiment, an aerosol generation device to which it is possible to attach a solid aerosol source is described. It should be noted that a container accommodating the solid aerosol source is also referred to as a "capsule" or a "stick-type substrate" depending on the product format. Capsules and stick-type substrates are consumables. Capsules and stick-type substrates therefore have fixed criteria for replacement.

### <Embodiment 1>

### <Example of External Appearance>

An example of the external appearance of an aerosol generation device used in Embodiment 1 will first be described.

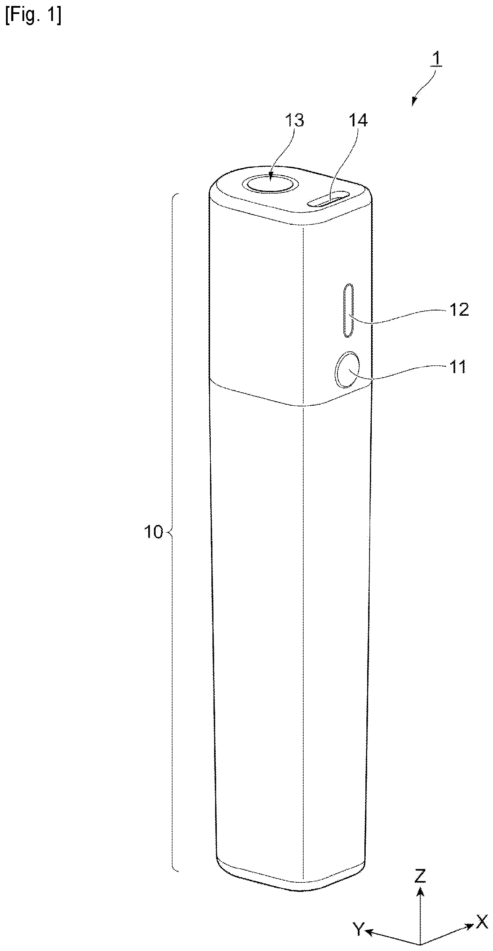

Fig. 1 is a diagram in which a front face side of an aerosol generation device 1 is viewed from diagonally above.

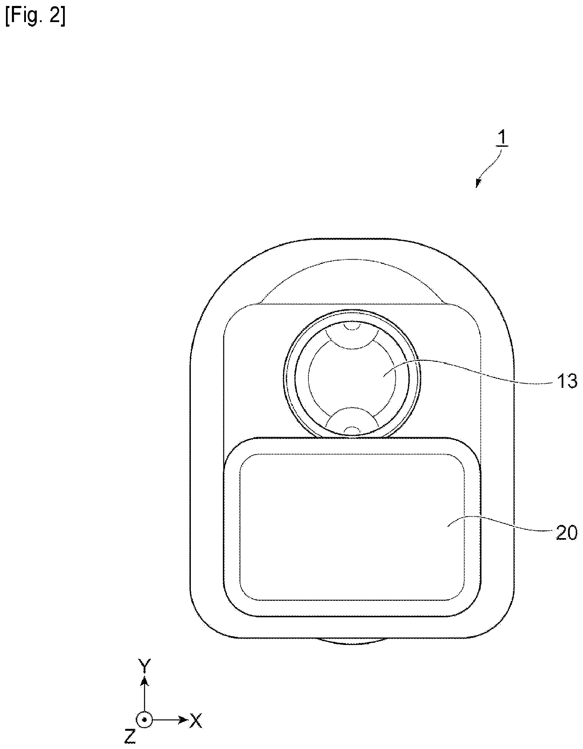

Fig. 2 is a diagram in which an upper face of the aerosol generation device 1 is viewed from above.

The aerosol generation device 1 is configured by a main body device 10, and a slide cover 20 which can be slidably operated along an upper face of the main body device 10. It should be noted that, for convenience of description, fig. 1 shows a state in which the slide cover 20 has been removed from the upper face of the main body device 10.

In the present embodiment, the face on which a power button 11 is provided will be referred to as a "front face".

Furthermore, the face on which an insertion port into which a stick-type substrate is inserted (referred to below as a "stick-type substrate insertion port") 13 is provided will be referred to as an "upper face".

Moreover, the face opposite to the upper face will be referred to as the "bottom face", and the other three faces will be referred to as "side faces".

An LED lamp 12 is provided on the front face of the main body device 10, in addition to the power button 11.

A USB (= universal serial bus) cable insertion port 14 is provided on the upper face of the main body device 10, in addition to the stick-type substrate insertion port 13.

The power button 11 is used for instructing the start of heating of the stick-type substrate, for resets, and for instructing Bluetooth (registered trademark) pairing, for example. A reset is performed by a long press (e.g., a press of 5 seconds or more) on the power button 11. BLE (= Bluetooth low energy) is used as Bluetooth in the present embodiment.

The LED lamp 12 is used to notify operating states of the main body device 10, and remaining capacity of a secondary battery, for example. In the present embodiment, a surface of the LED lamp 12 is covered by a light-transmitting material, which enables a user to observe an illumination state of the LED lamp 12.

Operating states include a state of progress of a heating cycle, a state of progress of charging, and errors, for example.

When the state of progress of the heating cycle is being notified, the length of the illuminated part of the LED lamp 12 indicates the remaining usable time. Moreover, the LED lamp 12 flashes slowly when there is little remaining time.

When the state of progress of charging is being notified, the LED lamp 12 flashes during charging, and the length of the flashing part of the LED lamp 12 increases as the amount of stored electricity increases due to charging. Moreover, when charging is complete, the LED lamp 12 turns off or stays in an illuminated state.

When the remaining capacity of the secondary battery is being displayed, the battery remaining capacity is displayed by the length of the illuminated part of the LED lamp 12 at the point in time when the slide cover 20 is opened or at the point in time when the slide cover 20 is closed, for example.

Moreover, the LED lamp 12 flashes when the secondary battery has little remaining capacity. Furthermore, the LED lamp 12 flashes rapidly in a state in which the remaining capacity of the secondary battery will not allow even one unused stick-type substrate to be smoked.

The slide cover 20 is dimensioned to cover approximately half of the upper face. The slide cover 20 operated to the open state completely conceals the USB cable insertion port 14, and the slide cover 20 operated to the closed state completely conceals the stick-type substrate insertion port 13. That is to say, the slide cover 20 has the role of alternately concealing either one of the stick-type substrate insertion port 13 and the USB cable insertion port 14. Fig. 2 depicts a state in which the slide cover 20 has been operated to the open state.

The stick-type substrate used in the present embodiment accommodates a solid aerosol source in a paper tube molded substantially into a cylindrical shape. The shape of the stick-type substrate insertion port 13 is therefore depicted in both fig. 1 and 2 by a circular shape which is generally the same shape as a stick-type substrate. The diameter of an opening part of the stick-type substrate insertion port 13 constitutes the dimension of a stick-type substrate which can be inserted. In other words, the diameter of the stick-type substrate is a dimension that enables the stick-type substrate to be inserted into the stick-type substrate insertion port 13.

The USB cable insertion port 14 is compatible with type C in the present embodiment. However, this does not mean that the shape of the terminal used for charging the secondary battery is limited to type C, or limited to USB. The terminal for a power source cable used for charging the secondary battery may be of another type.

A magnet, for example, is attached to a rear face of the slide cover 20. Meanwhile, a Hall IC is attached to the main body device 10 in a movable range of the slide cover 20.

The Hall IC is a magnetic sensor formed by a Hall element and an operational amplifier, etc., and outputs a voltage commensurate with the intensity of a magnetic field passing across the Hall element.

In the present embodiment, opening and closing of the slide cover 20 is detected from a change in the voltage output from the Hall IC accompanying sliding of the slide cover 20. That is to say, it is detected whether the slide cover 20 is at the closed position or the open position.

The aerosol generation device 1 of the present embodiment is sized to be capable of being held by a user in a single hand.

Various types of electronic components required for generating the aerosol are built into the main body device 10. In this sense, the main body device 10 is an example of an electronic device specifically for generating an aerosol. Moreover, in a narrow sense the main body device 10 is referred to as an aerosol generation device.

### <Internal Configuration>

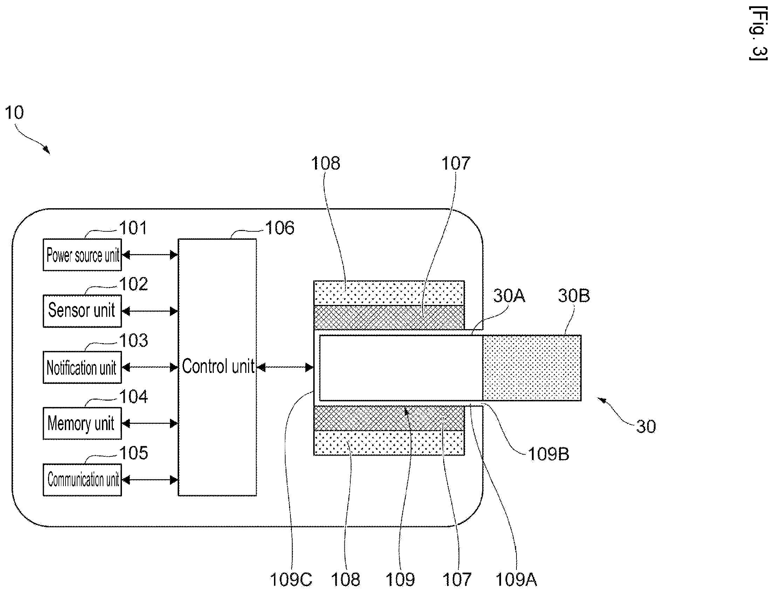

Fig. 3 is a diagram schematically illustrating the internal configuration of the main body device 10. It should be noted that fig. 3 depicts a state in which the stick-type substrate 30 has been fitted into the main body device 10. Furthermore, the internal configuration illustrated in fig. 3 is used to explain the components provided in the main body device 10 and positional relationships therebetween. For this reason, the external appearance of the components, etc. illustrated in fig. 3 does not necessarily match the external appearance diagrams discussed hereinabove.

The main body device 10 is configured by a power source unit 101, a sensor unit 102, a notification unit 103, a memory unit 104, a communication unit 105, a control unit 106, a heating unit 107, a heat insulating portion 108, and a holding portion 109.

As discussed hereinabove, fig. 3 depicts a state in which the stick-type substrate 30 is being held in the holding portion 109. The aerosol is inhaled by the user in this state.

The power source unit 101 is a unit for supplying power to each unit. The power source unit 101 stores power in a lithium ion secondary battery, for example. A lithium ion secondary battery is used in the present embodiment.

The secondary battery can be charged from an external power source. In the present embodiment, the external power source is assumed to be a mains power source or a mobile battery, for example.

The sensor unit 102 is an electronic component for detecting various types of information relating to the main body device 10.

The sensor unit 102 includes a pressure sensor such as a microphone capacitor, or a flow rate sensor, for example. The sensor unit 102 outputs detected information to the control unit 106. For example, when a change in air pressure or a flow of air accompanying inhalation has been detected, the sensor unit 102 outputs a numerical value representing inhalation of the aerosol by the user to the control unit 106.

The sensor unit 102 is provided in conjunction with a button or switch used for receiving user operations, for example. The button as referred to here includes the power button 11 (see fig. 1) discussed hereinabove. Furthermore, the switch includes the slide cover 20 (see fig. 2) discussed hereinabove.

If an operation by the user is detected, the sensor 102 outputs the detection of the operation to the control unit 106.

The sensor unit 102 additionally includes a temperature sensor for detecting the temperature of the heating unit 107. The temperature sensor detects the temperature of the heating unit 107 on the basis of an electrical resistance value of a conductive track of the heating unit 107, for example. The detected electrical resistance value is output from the sensor unit 102 to the control unit 106. It should be noted that the control unit 106 calculates the temperature of the heating unit 107 on the basis of the electrical resistance value. In other words, the control unit 106 calculates the temperature of the stick-type substrate 30 which is held in the holding portion 109.

The notification unit 103 is an electronic component for notifying the user of various types of information relating to the main body device 10. The notification unit 103 includes the LED lamp 12 (see fig. 1), for example. When the power source unit 101 needs to be charged, when the power source unit 101 is in the process of being charged, or when there is an abnormality in the main body device 10, the LED lamp 12 emits light with a different pattern in each case.

The patterns as referred to here include different colors and different timings for illumination/extinguishing, etc. It should be noted that the LED lamp 12 is an example of a light emitting device.

The notification unit 103 may also include another device which is used together with the light emitting device or is used instead of the light emitting device. Devices of this type include display devices for displaying text, images and other information, sound output devices for outputting sound, and vibration devices for causing the main body device 10 to vibrate, etc.

The light emitting device, display device, sound output device and vibration device, etc. are examples of notification units for notifying information.

The notification unit 103 may additionally notify the user that a state in which the aerosol can be inhaled has been achieved. This notification indicates a state in which the temperature of the stick-type substrate 30 heated by means of the heating unit 107 has reached a predetermined temperature.

The memory unit 104 stores various types of information relating to operation of the main body device 10. The memory unit 104 is configured by a non-volatile storage medium such as a flash memory, for example.

Information stored in the memory unit 104 includes an OS (= operating system) and FW (= firmware), and other programs, for example.

Furthermore, the information stored in the memory unit 104 includes information relating to control of electronic components, and information relating to inhalation actions of the user, for example.

Information relating to control includes, for example, the remaining capacity and SOH (= state of health) of the secondary battery, the number of inhalations, the times at which inhalation has occurred, the cumulative inhalation time, the cumulative number of heating cycles, and the cumulative number of times that the secondary battery has been charged and discharged. Information relating to inhalation actions of the user includes, for example, the total number of replaced stick-type substrates.

The communication unit 105 is a communication interface for implementing communication between the main body device 10 and other devices. The communication unit 105 communicates with other devices by means of a system based on any wired or wireless communication standard. Examples of communication standards as referred to here include wireless LAN (= local area network), serial signal line, Wi-Fi (registered trademark), and Bluetooth (registered trademark).

For example, the communication unit 105 sends the information relating to user inhalation to a smartphone. Furthermore, the communication unit 105 downloads, from a server, update programs and control profiles defining changes in the temperature of the heating unit 107 in a heating mode.

The control unit 106 functions as an arithmetic processing device and a control device, and controls operations of the main body device 10 in accordance with various programs.

Control signals are sent through signal lines different from a power source line. For example, communication in the main body device 10 employs a serial communication method such as an I2C (= inter-integrated circuit) communication method, an SPI (= serial peripheral interface) communication method, or a UART (= universal asynchronous receiver transmitter) communication method.

The control unit 106 is realized by means of an electronic circuit such as a CPU (= central processing unit), an MCU (= microcontroller unit), an MPU (= microprocessing unit), a GPU (= graphical processing unit), an ASIC (= application-specific integrated circuit), an FPGA (= field programmable gate array), or a DPS (= digital signal processor), for example.

The control unit 106 may also include a ROM (= read only memory) for storing programs and computation parameters, etc., and a RAM (= random access memory) for temporarily storing suitably changing parameters, etc.

The control unit 106 executes various types of processing and control through execution of programs.

The processing and control referred to here include, for example: supply of electricity by the power source unit 101; charging of the power source unit 101; detection of information by the sensor unit 102; notification of information employing the notification unit 103; writing of information to the memory unit 104 or reading of information from the memory unit 104; and sending/receiving of information employing the communication unit 105.

The control unit 106 additionally controls processing, etc. based on input of information to the electronic components and information output from the electronic components.

The holding portion 109 is a substantially cylindrical container. In the present embodiment, a space inside the holding portion 109 defined by an inner wall and a bottom face will be referred to as an internal space 109A. The internal space 109A is substantially columnar.

An opening 109B allowing the internal space 109A to communicate with the exterior is provided in the holding portion 109. The stick-type substrate 30 is inserted into the internal space 109A from the opening 109B. The opening 109B as referred to here corresponds to the stick-type substrate insertion port 13 in fig. 1. The stick-type substrate 30 is inserted until a tip end thereof touches a bottom portion 109C.

The stick-type substrate 30 is only partially accommodated in the internal space 109A. A state in which the stick-type substrate 30 is accommodated in the internal space 109A will be referred to as the stick-type substrate 30 being held in the internal space 109A.

The inner diameter of at least part of the holding portion 109 in an axial direction thereof is formed so as to be smaller than the outer diameter of the stick-type substrate 30.

An outer circumferential surface of the stick-type substrate 30 inserted into the internal space 109A is therefore subjected to pressure from the inner wall of the holding portion 109. The stick-type substrate 30 is held in the internal space 109A by means of this pressure.

The holding portion 109 also has a function of defining a flow path for air passing through the stick-type substrate 30. An air inflow hole, which is an inlet for air into the flow path, is disposed in the bottom portion 109C, for example. Moreover, the opening 109B serves as an air outflow hole, which is an outlet for the air.

In the present embodiment, only part of the stick-type substrate 30 is held in the holding portion 109, with the remainder protruding outside from an enclosure. The part which is held in the holding portion 109 will be referred to below as a substrate portion 30A, and the part protruding from the enclosure will be referred to below as a mouthpiece portion 30B.

The aerosol source is accommodated in at least the substrate portion 30A. The aerosol source is a substance which is atomized by heating so as to generate an aerosol.

The aerosol source includes shredded tobacco, and also processed products obtained by molding a tobacco raw material into a granular form, a sheet form or a powder form, or other tobacco-derived substances.

In addition, the aerosol source may also include non-tobacco-derived substances produced from plants other than tobacco, such as mint or herb. The aerosol source may include a flavoring component such as menthol, for example.

When the main body device 10 is a medical inhaler, the aerosol source may include a drug to be inhaled by a patient. It should be noted that the aerosol source is not limited to a solid, and may equally be a polyhydric alcohol such as glycerol or propylene glycol, or may be a liquid such as water, for example.

At least part of the mouthpiece portion 30B is held in the user's mouth during inhalation.

When the user inhales with the mouthpiece portion 30B held in their mouth, air flows into the internal space 109A from the air inflow hole. The air that has flowed in reaches the user's mouth after passing through the internal space 109A and the substrate portion 30A. The air reaching the user's mouth contains the aerosol generated by the substrate portion 30A.

The heating unit 107 is formed by a heater or other heat-generating element. The heating unit 107 is formed by any material such as a metal or polyimide. The heating unit 107 is constructed in the form of a film, for example, and is fitted to the outer circumferential surface of the holding portion 109.

The aerosol source contained in the stick-type substrate 30 is heated and atomized by the heat generated by the heating unit 107. The atomized aerosol source is mixed with air, etc., and an aerosol is generated.

In fig. 3, the outer circumferential region of the stick-type substrate 30 is initially heated, with the range of heating steadily moving toward the center.

Atomization of the aerosol source therefore starts from the outer circumferential region of the stick-type substrate 30 and steadily moves toward the center.

The heating unit 107 generates heat by means of electrical supply from the power source unit 101. Electrical supply to the heating unit 107 is permitted when a predetermined user operation has been detected by means of the sensor unit 102, for example. The predetermined user operation as referred to here includes operation of the slide cover 20 (see fig. 2) and/or of the power button 11 (see fig. 1).

Moreover, inhalation by the user becomes possible when the temperature of the stick-type substrate 30 heated by means of the heating unit 107 reaches a predetermined temperature. Inhalation of the aerosol by the user is detected by means of the flow rate sensor, etc. in the sensor unit 102 and is saved in the memory unit 104.

Electrical supply to the heating unit 107 is stopped when a predetermined user operation is subsequently detected. The predetermined user operation includes an operation to close the slide cover 20.

It should be noted that, even if the predetermined user operation is not detected, electrical supply to the heating unit 107 is stopped when a heating time defined in the control profile has expired.

It is additionally possible to adopt a method in which electricity is supplied to the heating unit 107 while inhalation by the user is detected, and electrical supply to the heating unit 107 is stopped when inhalation by the user is no longer detected.

Furthermore, in the example of fig. 3, the heating unit 107 is disposed at the outer circumferential portion of the stick-type substrate 30, but it is equally possible for the heating unit 107 to be a blade-like metal piece which is inserted into the stick-type substrate 30, or for the heating unit 107 to be a metal piece built into the stick-type substrate 30. When a metal piece acting as the heating unit 107 is built into the stick-type substrate 30, an induction heating coil should be arranged around the holding portion 109.

The heat insulating portion 108 is a member for reducing propagation of heat generated by the heating unit 107 to the surrounding area. The heat insulating portion 108 is therefore disposed so as to cover at least the outer circumferential surface of the heating unit 107.

For example, the heat insulating portion 108 is configured by a vacuum insulating material or an aerogel insulating material, etc. A vacuum insulating material is a heat insulating material in which a state of high vacuum is created by wrapping glass wool and silica (silicon powder), etc. in a resin film, for example, so that heat conduction by gas is as close as possible to zero.

### <Electronic Circuit Connection Configuration>

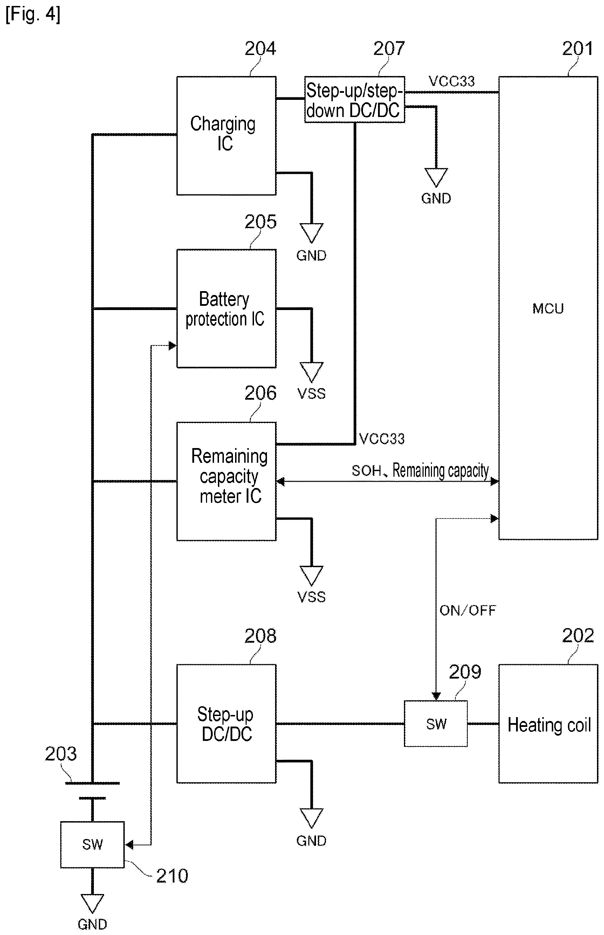

Fig. 4 is a diagram schematically illustrating connection relationships in an electronic circuit of the main body device 10. Fig. 4 illustrates typical connection relationships among components, unlike the functional configuration illustrated in fig. 3.

Fig. 4 illustrates an MCU 201 serving as the control unit 106 (see fig. 3), a heating coil 202 serving as the heating unit 107 (see fig. 3), a secondary battery 203 serving as the power source unit 101 (see fig. 3), a charging IC 204, a battery protection IC 205, a remaining capacity meter IC 206, a step-up/step-down DC/DC circuit 207, a step-up DC/DC circuit 208, and switches 209, 210.

In fig. 4, power source lines are denoted by the thick lines, and signal lines are denoted by the narrow lines with arrows.

The charging IC 204 is a circuit for controlling distribution of power supplied from the secondary battery 203 and supply of power from an external power source to the secondary battery 203 during charging.

An output voltage of the secondary battery 203 is high in a state of full charge, but drops as the remaining capacity of the secondary battery 203 decreases. Meanwhile, the parts of the aerosol generation device 1 have various required voltage values. For example, a system power source VCC33 required for operation of the MCU 201, etc., has a fixed voltage of 3.3 V.3V.

An output terminal of the charging IC 204 shown in fig. 4 is therefore connected to the step-up/step-down DC/DC circuit 207 via a power source line.

The step-up/step-down DC/DC circuit 207 steps up or steps down the output voltage of the secondary battery 203 and outputs a voltage of 3.3 V (i.e., VCC33) to the power source line.

It should be noted that the charging IC 204 applies a voltage of 5 V to the power source line connected to the LED lamp 12 (see fig. 1), which is not depicted. The charging IC 204 generates a voltage of 5 V by means of USB OTG (= on-the-go), for example, and outputs this voltage to the power source line connected to the LED lamp 12.

The battery protection IC 205 is a protection circuit for the secondary battery 203, and stops charging/discharging of the secondary battery 203 by controlling the switch 210 to an open state when a need for protection arises. It should be noted that the switch 210 is provided between the secondary battery 203 and an earth (ground) wire. For example, the battery protection IC 205 stops charging when overcharging is detected, stops discharging when overdischarge is detected, and stops large-current discharge when a short-circuit is detected.

The remaining capacity meter IC 206 is a circuit which receives a supply of the system power source VCC33 from the step-up/step-down DC/DC circuit 207, and calculates information indicating the state of the secondary battery 203 from values of the output voltage and output current of the secondary battery 203. The remaining capacity meter IC 206 calculates the SOC (= state of charge), SOH, and full charge capacity, for example.

The SOC is a charging ratio in which the capacity in a state of full charge of the secondary battery 203 at the present time is taken as 100%, and the capacity in a state of complete discharge is taken as 0%. The full charge capacity of the secondary battery 203 at the present time is calculated by using the output voltage or output current, etc., of the secondary battery 203 when charging is complete. Moreover, the remaining capacity of the secondary battery 203 at the present time is calculated by using the output voltage or output current, etc., of the secondary battery 203 at each point in time.

The SOH is the percentage of the full charge capacity (Ah) of the secondary battery 203 at the present time (in a deteriorated state) when the full charge capacity (Ah) of the secondary battery 203 at the start of use (a new battery or an undeteriorated battery) is taken as 100%. The full charge capacity at the start of use is stored in the non-volatile memory unit 104 (see fig. 3). An "undeteriorated state" as referred to here means a state which is the same as for a new battery, or largely the same (e.g., 98% or more as compared to a new battery). It should be noted that a numerical value of the secondary battery 203 defined in a design specification, etc., is used for the full charge capacity (Ah) which is the same as for a new battery or largely the same as for a new battery.

The calculated remaining capacity, etc., are read to the MCU 201.

The step-up DC/DC circuit 208 is a circuit for stepping up the output voltage of the secondary battery 203 used to supply power to the heating coil 202. Moreover, the switch 209 is provided between the step-up DC/DC circuit 208 and the heating coil 202, and a stepped-up voltage is applied to the heating coil 202 only when the switch 209 is controlled to a closed state (ON state) by means of the MCU 201.

### <Heating Cycle>

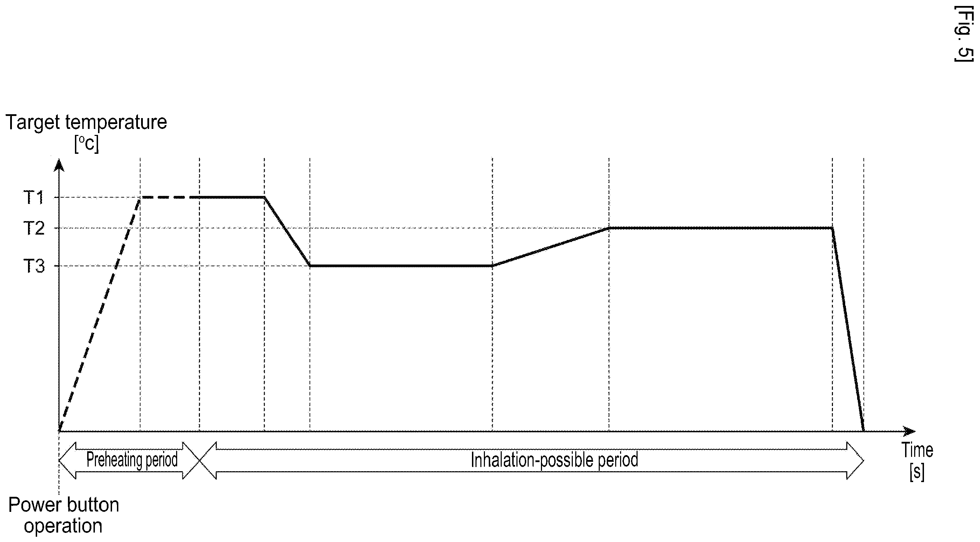

Fig. 5 is a diagram illustrating an example of a control profile used in the aerosol generation device 1. The vertical axis denotes target temperature [°C], and the horizontal axis denotes time [s].

The MCU 201 (see fig. 4) implements temperature management of the heating coil 202 (see fig. 4) based on the control profile.

Heating of the heating coil 202 based on the control profile is started by means of the operation of the power button 11 (see fig. 1). It should be noted that the temperature of the heating coil 202 and the temperature of the stick-type substrate 30 (see fig. 3) immediately after operation of the power button 11 has been detected are largely the same as the ambient air temperature in which the aerosol generation device 1 is being used. From this state, an increase in the temperature of the heating coil 202 is started.

Now, the aerosol generation device 1 will be used in various seasons and at various air temperatures. If there is a single target temperature, then when the aerosol generation device 1 is used outdoors in winter, for example, the time taken until the heating coil 202 (or stick-type substrate 30) reaches the target temperature is longer than in a standard usage environment because of the large temperature difference between the surrounding air temperature and the target temperature. The standard usage environment means a situation in which the air temperature is 25°C, for example.

A "preheating period" is therefore provided at the beginning of the control profile in the aerosol generation device 1 used in the present embodiment.

The preheating period is a period for causing the temperature of the heating coil 202 to rise to a maximum target temperature T1 in a single operation. By providing this preheating period, it is possible to raise the temperature of the stick-type substrate 30 to the maximum target temperature T1 within a predefined period, regardless of differences in the environment during use.

When the preheating period has ended, the control profile transitions to an "inhalation-possible period". When the inhalation-possible period, inhalation of the aerosol generated from the aerosol source of the stick-type substrate 30 is possible.

In the control profile shown in fig. 5, when the inhalation-possible period begins, the temperature of the heating coil 202 is reduced to a minimum target temperature T3 (<T1) so that aerosol generation does not proceed excessively.

When the temperature of the heating coil 202 falls to the minimum target temperature T3, the MCU 201 maintains that temperature for a certain time. Moreover, when the latter half period of the control profile starts, the MCU 201 increases the temperature of the heating coil 202 to a target temperature T2 (smaller than T1 but greater than T3) and maintains that temperature. By means of this temperature increase, all of the aerosol source remaining in the stick-type substrate 30 can be fully used.

Moreover, when a predefined time has elapsed from the start of the inhalation-possible period, the MCU 201 terminates heating control of the heating coil 202. The temperature of the heating coil 202 gradually falls to the surrounding air temperature as a result.

### <Correcting Threshold Commensurate with Deterioration of Secondary Battery>

As described above, repeated charging and discharging causes deterioration of the secondary battery 203 (see fig. 4). The internal resistance value of the secondary battery 203 increases as deterioration progresses. When the internal resistance value rises, the output voltage of the secondary battery 203 falls below the output voltage in the initial state (i.e. the undeteriorated state).

Even if there is a reduction in the output voltage of the secondary battery 203, the voltage required for the system power source VCC33 and for heating of the heating coil 202 can still be generated by means of the step-up/step-down DC/DC circuit 207 and the step-up DC/DC circuit 208.

However, there are also limits to voltage boosting afforded by the step-up/step-down DC/DC circuit 207 and the step-up DC/DC circuit 208. This voltage will be referred to as the "guaranteed operating voltage". The guaranteed operating voltage is defined as the minimum voltage which the output voltage of the secondary battery 203 should satisfy during heating of the heating coil 202, for example.

The guaranteed operating voltage is the same regardless of the extent of deterioration of the secondary battery 203, but since the internal resistance value of a secondary battery 203 in which deterioration has progressed is greater than the value in the initial state, the current output from the secondary battery 203 flows less readily. As a result, as deterioration progresses, the current value supplied from the deteriorated secondary battery 203 will become smaller than in the initial state, even if the output voltage is the same. That is to say, the power supplied from the secondary battery 203 close to the guaranteed operating voltage decreases as deterioration progresses.

However, there is no difference in the power consumed by the aerosol generation device 1 with a deteriorated secondary battery 203 and a secondary battery 203 in the initial state.

Consequently, as the secondary battery 203 deteriorates, the secondary battery 203 outputting an output voltage close to the guaranteed operating voltage will require more remaining capacity than in the initial state to supply the required power to each part. In other words, a secondary battery 203 in the initial state uses up less remaining capacity when outputting an output voltage close to the guaranteed operating voltage than a secondary battery 203 in which deterioration has progressed.

Accordingly, in an existing aerosol generation device 1, the threshold used to determine whether or not the secondary battery 203 has sufficient remaining capacity to enable an unused stick-type substrate 30 (see fig. 3) to be fully used is set on the basis of the remaining capacity required to maintain the guaranteed operating voltage in a deteriorated state, and the capacity consumed by a standard user in fully using an unused stick-type substrate 30.

As a result, even in a deteriorated secondary battery 203, it is possible to determine whether or not there is sufficient remaining capacity to fully use an unused stick-type substrate 30 before the start of heating of the heating coil 202.

Meanwhile, the remaining capacity in the secondary battery 203 required to generate the guaranteed operating voltage is far less when there is little deterioration of the secondary battery 203. As a result, the remaining capacity of the secondary battery 203 is judged to be below the threshold while there is little deterioration of the secondary battery 203, regardless of whether several stick-type substrates 30 could still actually be heated.

Accordingly, the present embodiment adopts a system in which the threshold used to determine whether or not an unused stick-type substrate 30 could be fully used is corrected in accordance with the extent of deterioration of the secondary battery 203.

In the present embodiment, the cumulative number of heating cycles is used as an index of the extent of deterioration of the secondary battery 203. The cumulative number as referred to here is counted by the MCU 201 (see fig. 4) and is recorded in the memory unit 104 (see fig. 3). It should be noted that the cumulative number means the total number of heating cycles counted after the start of use by the user. In other words, the cumulative number means the total number of heating cycles started after the start of use of the aerosol generation device 1 shipped from the factory.

It should be noted that the MCU 201 (see fig. 4) implements the correction of the threshold based on the cumulative number of heating cycles.

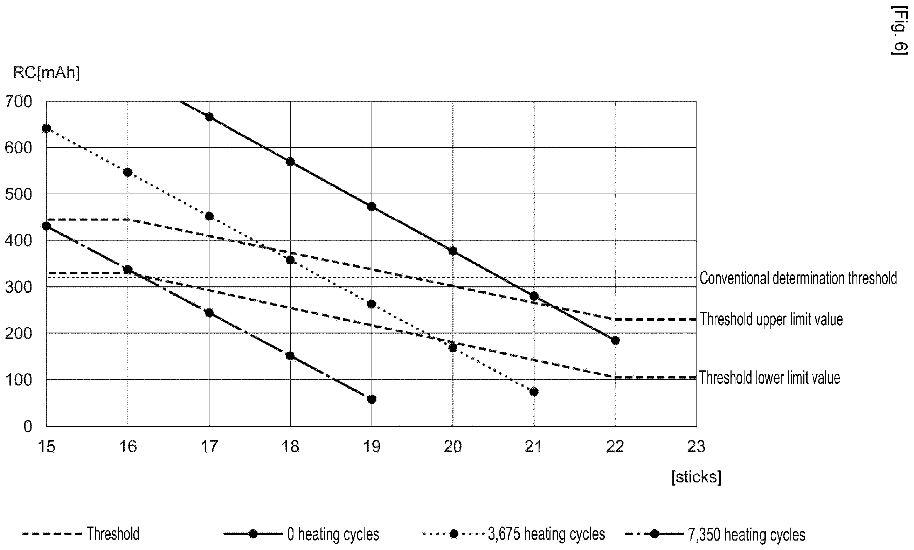

Fig. 6 is a diagram illustrating the threshold used to determine whether or not the secondary battery 203 has the remaining capacity needed in order to fully use one unused stick-type substrate.

In the following description, the determination of whether or not one unused stick-type substrate 30 can be fully used with the remaining capacity of the secondary battery 203 at the present time will also be referred to as the "last-stick determination". Furthermore, the threshold used for this determination will also be referred to as the "last-stick determination threshold".

The vertical axis shows the remaining capacity RC of the secondary battery 203, and the horizontal axis shows the number of stick-type substrates 30 for which inhalation is possible with one full charge.

The thick dashed lines shown in the drawing denote the upper limit value and lower limit value of the last-stick determination threshold. The difference between the lower limit value and the upper limit value as referred to here is set to be equal to or greater than the capacity required for one unused stick-type substrate 30 to be fully used.

Fig. 6 shows a graph (broken lines) in which the threshold decreases as the number of sticks for which inhalation is possible increases, but this graph of the threshold is drawn from the perspective of illustrating the relationship with a plurality of straight lines illustrating changes in the remaining capacity accompanying an increase in the cumulative number of heating cycles.

It should be noted that an increase in the cumulative number of heating cycles means that the number of times the secondary battery 203 has been charged and discharged also increases, and deterioration of the secondary battery 203 progresses.

In the case of fig. 6, the lower limit value of the last-stick determination threshold applied to a secondary battery 203 for which the cumulative number of heating cycles is zero is approximately 105 mAh, and the upper limit value is approximately 230 mAh. It should be noted that the SOH of a secondary battery 203 for which the cumulative number of heating cycles is zero is approximately 100%.

The lower limit value as referred to here is defined as the remaining capacity of the secondary battery 203 when the output voltage is the guaranteed operating voltage. That is to say, the lower limit value as referred to here is the remaining capacity of the secondary battery 203 at which the guaranteed operating voltage can be generated.

Consequently, this is affected by the guaranteed operating voltage defined for the aerosol generation device 1, and differences in the type and characteristics of the secondary battery 203 being used. The initial value of 105 mAh is therefore merely just an example of a numerical value used for convenience of description. The same also applies to other numerical values.

The upper limit value is defined as a value obtained by adding a predetermined value to the lower limit value.

The predetermined value in the present embodiment is provided as an added value comprising the capacity of the secondary battery 203 required to fully use one unused stick-type substrate 30 plus a margin.

In the case of the present embodiment, the capacity of the secondary battery 203 required to fully use one unused stick-type substrate 30 is 105 mAh and the margin is 20 mAh.

The predetermined value is therefore 125 mAh. If the margin were 0 mAh, then the predetermined value would be 105 mAh, and if the margin were 30 mAh, then the predetermined value would be 135 mAh.

In the case of fig. 6, the lower limit value of the last-stick determination threshold when the cumulative number of heating cycles is 7,350 is approximately 320 mAh, and the upper limit value is approximately 445 mAh. It should be noted that the SOH of the secondary battery 203 when the cumulative number of heating cycles is 7,350 is approximately 80%. That is, the deterioration of the secondary battery 203 has progressed by approximately 20% from the initial state.

The upper limit value as referred to here is also provided as a value obtained by adding the predetermined value of 125 mAh to the value of the lower limit value.

In the present embodiment, the lower limit value of the threshold when cumulative number of heating cycles is between zero and 7,350 is determined by linear interpolation between approximately 105 mAh and approximately 320 mAh. Furthermore, the upper limit value of the threshold when the cumulative number of heating cycles is between zero and 7,350 is determined as a value obtained by adding the predetermined value (i.e., 125 mAh) to the lower limit value determined by means of linear interpolation. These lower limit values mean minimum values of the remaining capacity required by the secondary battery 203 at the present time in order to generate the guaranteed operating voltage.

Incidentally, the lower limit value of the threshold used when the cumulative number of heating cycles is 7,350 or more is fixed at 320 mAh and the upper limit at 445 mAh.

It should be noted that the increases in the lower limit value and upper limit value of the threshold are not limited to being linear, and the increases may also be made in accordance with an approximation or a data table.

For reference, the conventional determination threshold is a fixed value of approximately 320 mAh, irrespective of the extent of deterioration of the secondary battery 203. In fig. 6, the conventional determination threshold is indicated by a thin dashed line.

The MCU 201 in the present embodiment (see fig. 4) acquires the remaining capacity of the secondary battery 203 at the present time from the remaining capacity meter IC 206 (see fig. 4) and compares the remaining capacity with a threshold determined in accordance with the cumulative number of heating cycles.

It should be noted that the cumulative number of heating cycles is counted by the MCU 201 and the updated result is recorded in the memory 104 (see fig. 3).

Heating of the stick-type substrate 30 by the heating coil 202 is prohibited if the current remaining capacity is below the threshold determined in accordance with the cumulative number.

For example, the straight line representing the change in remaining capacity when the cumulative number of heating cycles is zero (corresponding to a case in which the SOH is 100%) lies between the lower limit value and the upper limit value of the determination threshold at the 22nd inhaled stick. It should be noted that when the conventional determination threshold is used, the remaining capacity of the secondary battery 203 when the cumulative number of heating cycles is zero satisfies 320 mAh or more only up to 20 sticks.

Consequently, when the determination threshold adopted in the present embodiment is used, the number of stick-type substrates 30 for which inhalation is possible with a secondary battery 203 having a cumulative number of heating cycles of zero increases from 20 to 22.

For example, the straight line showing the change in remaining capacity when the cumulative number of heating cycles is 3,675 (corresponding to a case in which the SOH is 90%) lies between the lower limit value and the upper limit value of the determination threshold at the 19th inhaled stick. It should be noted that when the conventional determination threshold is used, the remaining capacity of the secondary battery 203 when the cumulative number of heating cycles is 3,675 satisfies 320 mAh or more only up to 18 sticks.

Consequently, when the determination threshold adopted in the present embodiment is used, the number of stick-type substrates 30 for which inhalation is possible with a secondary battery 203 having a cumulative number of heating cycles of 3,675 increases from 18 to 19.

For example, the straight line showing the change in remaining capacity when the cumulative number of heating cycles is 7,350 (corresponding to a case in which the SOH is 80%) lies between the lower limit value and the upper limit value of the determination threshold at the 16th inhaled stick. It should be noted that when the conventional determination threshold is used, the remaining capacity of the secondary battery 203 when the cumulative number of heating cycles is 7,350 satisfies 320 mAh or more only up to 16 sticks.

Consequently, when the determination threshold adopted in the present embodiment is used, and also when the conventional determination threshold is used, the number of stick-type substrates 30 for which inhalation is possible with a secondary battery 203 having a cumulative number of heating cycles of 7,350 remains at 16.

### <Processing Operation Example>

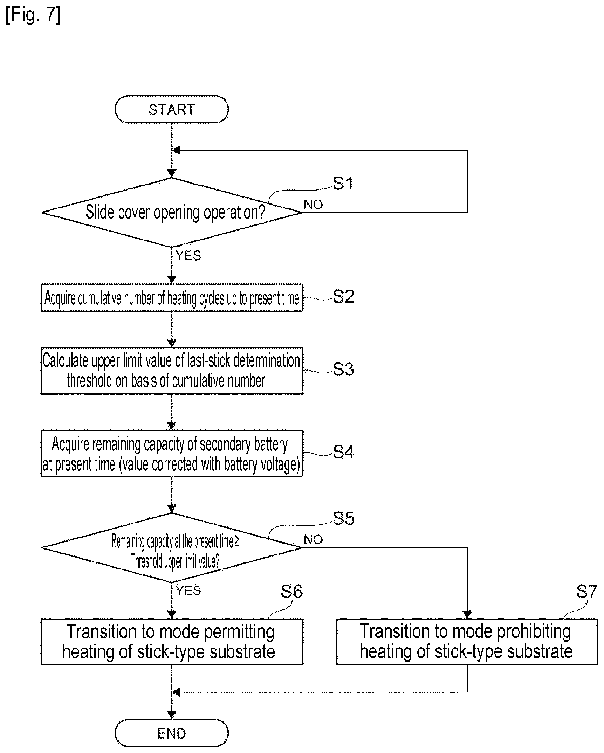

Fig. 7 is a flowchart illustrating last-stick determination processing performed by the aerosol generation device 1 of Embodiment 1. Note that the symbol "S" in the drawings means "step".

The processing operations shown in fig. 7 are implemented by the MCU 201 (see fig. 4).

The MCU 201 first of all determines whether or not an operation to open the slide cover 20 (see fig. 2) has been detected (step 1).

A negative result is obtained in step 1 when an operation to open the slide cover 20 has not been detected. In this case, the MCU 201 repeats the determination of step 1.

Meanwhile, an affirmative result is obtained in step 1 when an operation to open the slide cover 20 has been detected.

In this case, the MCU 201 acquires the cumulative number of heating cycles up to the present time (step 2). The cumulative number of heating cycles up to the present time may be read from a register or the like of the MCU 201, or may be read from the memory unit 104.

The MCU 201 then calculates the upper limit value of the last-stick determination threshold on the basis of the cumulative number (step 3). For example, when the cumulative number is zero, the upper limit value is set at approximately 230 mAh. The upper limit value as referred to here is the initial value of the threshold.

Moreover, when the cumulative number is 7,350 or more, the upper limit value is set at 445 mAh. Moreover, when the cumulative number is between zero and 7,350, the upper limit value is calculated as an intermediate value between 230 mAh and 445 mAh by means of linear interpolation.

The MCU 201 then acquires the remaining capacity at the present time of the secondary battery 203 (step 4). The remaining capacity at the present time of the secondary battery 203 is a value obtained by correcting the value read out from the remaining capacity meter IC 206 with the battery voltage. The correction computation as referred to here is implemented by the MCU 201. The correct remaining capacity is obtained by means of the correction computation. The details of the correction computation are already well known and will not be described here.

The MCU 201 then determines whether or not the remaining capacity at the present time is equal to or greater than the upper limit value of the threshold (step 5).

An affirmative result is obtained in step 5 when the remaining capacity at the present time is equal to or greater than the upper limit value of the threshold. In this case, the MCU 201 transitions to a mode permitting heating of the stick-type substrate 30 (step 6).

Meanwhile, a negative result is obtained in step 5 when the remaining capacity at the present time is smaller than the upper limit value of the threshold. In this case, the MCU 201 transitions to a mode prohibiting heating of the stick-type substrate 30 (step 7).

### <Advantageous Effects>

If the aerosol generation device 1 according to the present embodiment is used, it is possible to increase the number of stick-type substrates 30 that can be fully used with a single full charge as compared to an existing device. It should be noted that an existing device means a device in which the last-stick determination threshold is provided as a fixed value.

As described above, in the aerosol generation device 1 according to the present embodiment, when the cumulative number of heating cycles is small (for example, approximately 100), it is possible to increase the number of stick-type substrates 30 that can be fully used with a single full charge by around 2 as compared to an existing device.

Furthermore, in the aerosol generation device 1 according to the present embodiment, when the cumulative number of heating cycles is approximately 3,675, it is possible to increase the number of stick-type substrates 30 that can be fully used with a single charge by approximately 1 in comparison with an existing device. Moreover, when the cumulative number of heating cycles is approximately 7,350, the number of stick-type substrates 30 that can be fully used with a single full charge is the same as with an existing device.

That is to say, if the aerosol generation device 1 according to the present embodiment is used, the smaller the amount of deterioration of the secondary battery 203, the greater the increase in the number of stick-type substrates 30 that can be fully used with a single full charge.

### <Embodiment 2>

In the present embodiment, a description will be given of another last-stick determination processing operation performed by the aerosol generation device 1 (see fig. 1).

It should be noted that the external appearance, internal configuration, and electronic circuit connection configuration, etc. of the aerosol generation device 1 envisaged by the present embodiment are all the same as in Embodiment 1.

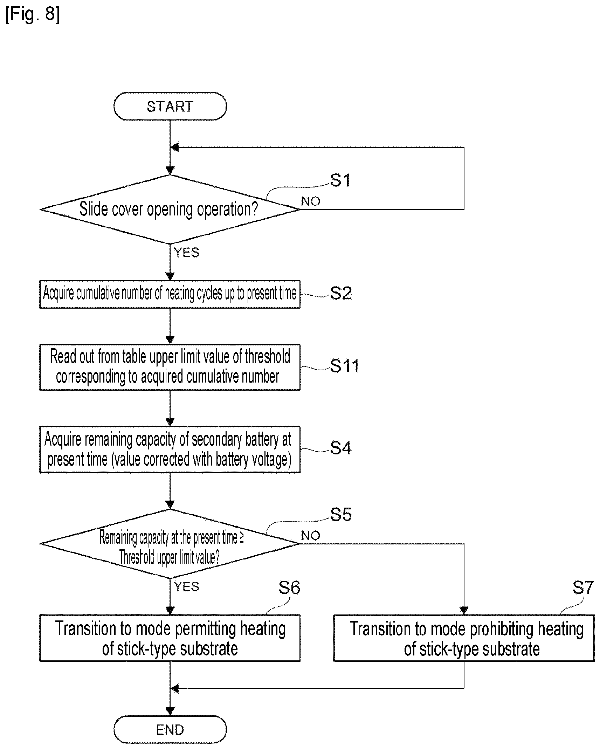

Fig. 8 is a flowchart illustrating last-stick determination processing performed by the aerosol generation device 1 of Embodiment 2. Corresponding reference signs are given in fig. 8 for parts which correspond to those of fig. 7.

In the present embodiment also, the MCU 201 determines whether or not an operation to open the slide cover 20 (see fig. 2) has been detected (step 1), and the MCU 201 acquires the cumulative number of heating cycles up to the present time when an opening operation has been detected (step 2).

The MCU 201 then reads out from a table the upper limit value of the threshold corresponding to the acquired cumulative number (step 11).

The table as referred to here is a table recording relationships between the cumulative number of heating cycles and the last-stick determination threshold, and is stored in the non-volatile memory unit 104, for example.

It should be noted that when the acquired cumulative number is not in the table, a threshold calculated by means of an interpolation computation will be used.

The subsequent processing operations are the same as in fig. 7.

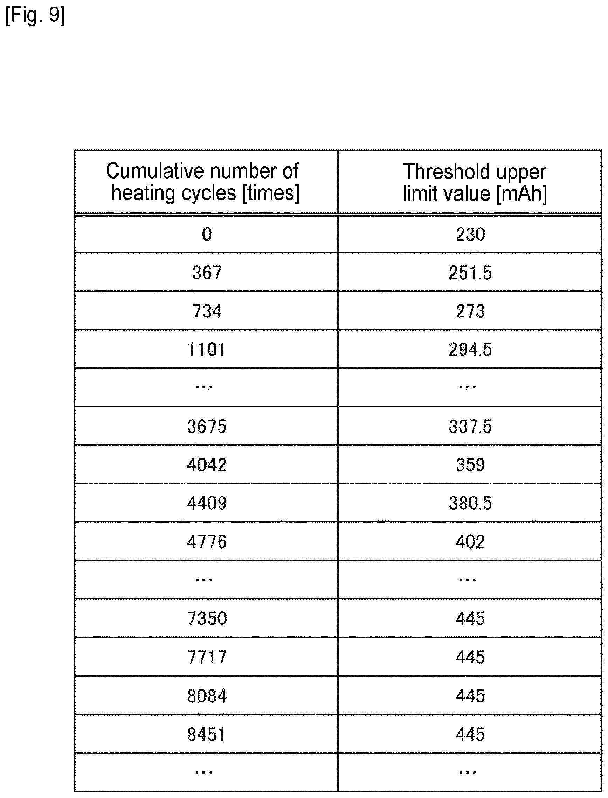

Fig. 9 is a diagram showing an example of the table used in step 11. The cumulative number of heating cycles is arranged at approximately equal intervals in the left-hand column of the table shown in fig. 9, and numerical values providing the upper limit value of the corresponding threshold are arranged in the right-hand column of the table. In the case of fig. 9, when the cumulative number increases by 367, the upper limit value of the threshold varies by 21.4 or 21.5 mAh.

It should be noted that the steps between the cumulative numbers prepared in the table may be steps of one or steps of ten.

### <Advantageous Effects>

The aerosol generation device 1 according to the present embodiment differs from Embodiment 1 in that the last-stick determination threshold is read out from a table, but the correction of the last-stick determination threshold in accordance with the cumulative number of heating cycles is the same as in Embodiment 1.

Accordingly, in the same way as in Embodiment 1, the smaller the amount of deterioration of the secondary battery 203, the greater the increase in the number of stick-type substrates 30 that can be fully used with a single full charge in comparison with an existing device.

### <Embodiment 3>

In the present embodiment, a description will be given of another last-stick determination processing operation performed by the aerosol generation device 1 (see fig. 1).

In the present embodiment, the last-stick determination threshold is corrected in accordance with the total number of stick-type substrates 30 (see fig. 3) that have been replaced up to the present time.

It should be noted that the external appearance, internal configuration, and electronic circuit connection configuration, etc. of the aerosol generation device 1 envisaged by the present embodiment are all the same as in Embodiment 1.

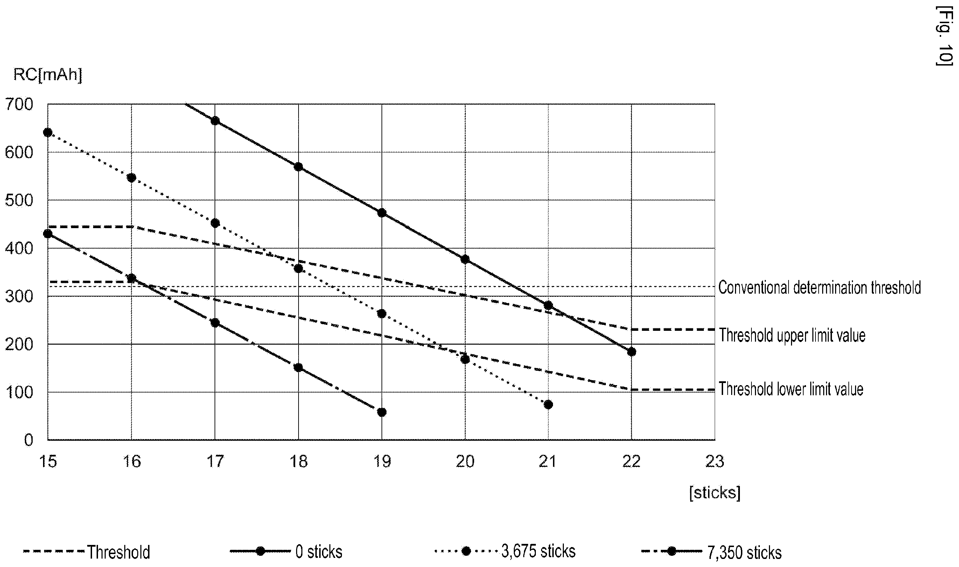

Fig. 10 is a diagram illustrating the threshold used to determine whether or not the secondary battery 203 has the remaining capacity needed in order to fully use one unused stick-type substrate 30. Corresponding reference signs are given in fig. 10 for parts that correspond to those of fig. 6.

It should be noted that fig. 10 is drawn from the perspective of illustrating the relationship with a plurality of straight lines illustrating changes in remaining capacity accompanying an increase in the total number of replaced stick-type substrates 30.

Incidentally, one stick-type substrate 30 is replaced per one heating cycle. Therefore, an increase in the total number of replaced stick-type substrates 30 means that the number of times the secondary battery 203 has been charged and discharged also increases, and deterioration of the secondary battery 203 progresses.

In the case of fig. 10, the lower limit value of the last-stick determination threshold applied to a secondary battery 203 when the total number of replaced stick-type substrates 30 is zero is approximately 105 mAh, and the upper limit value is approximately 230 mAh. The upper limit value as referred to here is a so-called initial value. It should be noted that the SOH of the secondary battery 203 when the total number of replaced stick-type substrates 30 is zero is approximately 100%.

The lower limit value as referred to here is defined as the remaining capacity of the secondary battery 203 when the output voltage is the guaranteed operating voltage. That is to say, the lower limit value as referred to here is the remaining capacity of the secondary battery 203 at which the guaranteed operating voltage can be generated.

Consequently, this is affected by the guaranteed operating voltage defined for the aerosol generation device 1, and differences in the type and characteristics of the secondary battery 203 being used. The initial value of 105 mAh is therefore merely just an example of a numerical value used for convenience of description. The same also applies to other numerical values.

The upper limit value is defined as a value obtained by adding a predetermined value to the lower limit value.

The predetermined value in the present embodiment is also provided as an added value comprising the capacity of the secondary battery 203 required to fully use one unused stick-type substrate 30 plus a margin.

In the case of the present embodiment, the capacity of the secondary battery 203 required to fully use one unused stick-type substrate 30 is 105 mAh and the margin is 20 mAh.

The predetermined value is therefore 125 mAh. If the margin were 0 mAh, then the predetermined value would be 105 mAh, and if the margin were 30 mAh, then the predetermined value would be 135 mAh.

In the case of fig. 10, the lower limit of the last-stick determination threshold when the total number of replaced stick-type substrates 30 is 7,350 is approximately 320 mAh and the upper limit is approximately 445 mAh. It should be noted that the SOH of the secondary battery 203 when the total number of replaced stick-type substrates 30 is 7,350 is approximately 80%. That is, the deterioration of the secondary battery 203 has progressed by approximately 20% from the initial state.

The upper limit value as referred to here is also provided as a value obtained by adding the predetermined value of 125 mAh to the value of the lower limit value.

In the present embodiment, the lower threshold when the total number of replaced stick-type substrates 30 is between zero and 7,350 is determined by linear interpolation between approximately 105 mAh and approximately 320 mAh. Furthermore, the upper limit value of the threshold when the total number of replaced stick-type substrates 30 is between zero and 7,350 is determined as a value obtained by adding the predetermined value (i.e., 125 mAh) to the lower limit value determined by means of linear interpolation. These lower limit values mean minimum values of the remaining capacity required by the secondary battery 203 at the present time in order to generate the guaranteed operating voltage.

Incidentally, the lower limit of the threshold used when the total number of replaced stick-type substrates 30 is 7,350 or more is fixed at 320 mAh and the upper limit at 445 mAh.

For reference, the conventional determination threshold is a fixed value of approximately 320 mAh, irrespective of the extent of deterioration of the secondary battery 203. In fig. 10, the conventional determination threshold is shown by a thin dashed line.

The MCU 201 in the present embodiment (see fig. 4) acquires the remaining capacity at the present time of the secondary battery 203 from the remaining capacity meter IC 206 (see fig. 4) and compares the remaining capacity with a threshold that is determined in accordance with the total number of replaced stick-type substrates 30.

It should be noted that the total number of replaced stick-type substrates 30 is counted by the MCU 201 and the updated result is recorded in the memory unit 104 (see fig. 3).

Heating of the stick-type substrate 30 by the heating coil 202 is prohibited if the remaining capacity at the present time is below the threshold determined in accordance with the total number.

For example, the straight line showing the change in remaining capacity when the total number of replaced stick-type substrates 30 is zero (corresponding to a case in which the SOH is 100%) lies between the lower limit value and the upper limit value of the determination threshold at the 22nd inhaled stick. It should be noted that when the conventional determination threshold is used, the remaining capacity of the secondary battery 203 when the total number of replaced stick-type substrates 30 is zero satisfies 320 mAh or more only up to 20 sticks.

Consequently, when the determination threshold adopted in the present embodiment is used, the number of stick-type substrates 30 for which inhalation is possible with a secondary battery 203 with which the total number of replaced stick-type substrates 30 is zero increases from 20 to 22.

For example, the straight line showing the change in remaining capacity when the total number of replaced stick-type substrates 30 is 3,675 (corresponding to a case in which the SOH is 90%) lies between the lower limit value and the upper limit value of the determination threshold at the 19th inhaled stick. It should be noted that when the conventional determination threshold is used, the remaining capacity of the secondary battery 203 when the total number of replaced stick-type substrates 30 is 3,675 satisfies 320 mAh or more only up to 18 sticks.

Consequently, when the determination threshold adopted in the present embodiment is used, the number of stick-type substrates 30 for which inhalation is possible with a secondary battery 203 with which the total number of replaced stick-type substrates 30 is 3,675 increases from 18 to 19.

For example, the straight line showing the change in remaining capacity when the total number of replaced stick-type substrates 30 is 7,350 (corresponding to a case in which the SOH is 80%) lies between the lower limit value and the upper limit value of the determination threshold at the 16th inhaled stick. It should be noted that when the conventional determination threshold is used, the remaining capacity of the secondary battery 203 when the total number of replaced stick-type substrates 30 is 7,350 satisfies 320 mAh or more only up to 16 sticks.

Consequently, when the determination threshold adopted in the present embodiment is used, and also when the conventional determination threshold is used, the number of stick-type substrates 30 for which inhalation is possible with a secondary battery 203 with which the total number of replaced stick-type substrates 30 is 7,350 remains at 16.

### <Processing Operation Example>

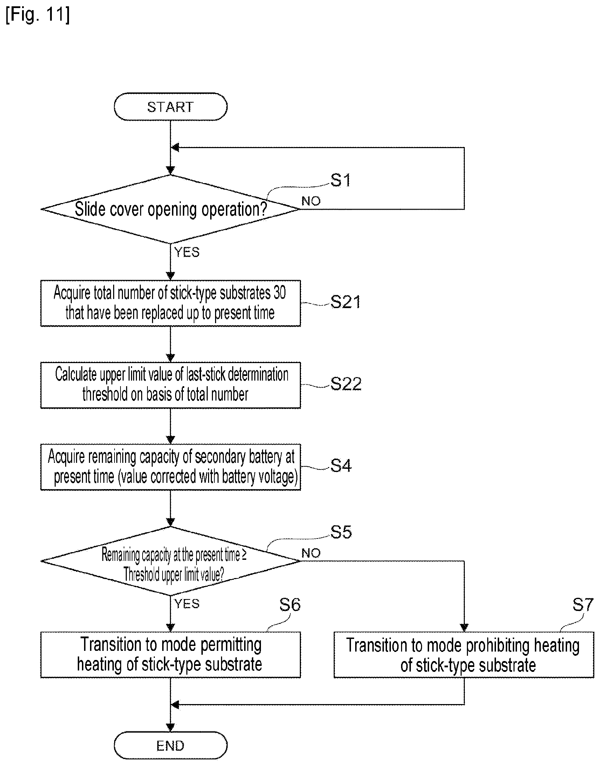

Fig. 11 is a flowchart illustrating last-stick determination processing performed by the aerosol generation device 1 of Embodiment 1. Corresponding reference signs are given in fig. 11 for parts which correspond to those of fig. 7.

The processing operations shown in fig. 11 are also implemented by the MCU 201 (see fig. 4).

The MCU 201 first of all determines whether or not an operation to open the slide cover 20 (see fig. 2) has been detected (step 1).

A negative result is obtained in step 1 when an operation to open the slide cover 20 has not been detected. In this case, the MCU 201 repeats the determination of step 1.

Meanwhile, an affirmative result is obtained in step 1 when an operation to open the slide cover 20 has been detected.

In this case, the MCU 201 acquires the total number of stick-type substrates 30 that have been replaced up to the present time (step 21). The total number of stick-type substrates 30 that have been replaced up to the present time may be read from a register or the like of the MCU 201, or may be read from the memory 104.

The MCU 201 then calculates the upper limit value of the last-stick determination threshold on the basis of the total number (step 22). For example, when the total number is zero, the upper limit value is set at 230 mAh, and when the total number is 7,350 or more, the upper limit value is set at 445 mAh. Moreover, when the total number is between zero and 7,350, the upper limit value is calculated as an intermediate value between 230 mAh and 445 mAh by means of linear interpolation.

The subsequent processing operations are the same as in fig. 7.

### <Advantageous Effects>

The aerosol generation device 1 according to the present embodiment differs from Embodiment 1 in that the last-stick determination threshold is corrected using the total number of stick-type substrates 30 replaced up to the present time, but the correction of the threshold in accordance with the progress of deterioration of the secondary battery 203 is the same as in Embodiment 1.

Accordingly, in the same way as in Embodiment 1, the smaller the amount of deterioration of the secondary battery 203, the greater the increase in the number of stick-type substrates 30 that can be fully used with a single full charge in comparison with an existing device.

### <Embodiment 4>

In the present embodiment, a table recording a relationship between the total number of stick-type substrates 30 that have been replaced up to the present time and the last-stick determination threshold is prepared in the aerosol generation device 1 (see fig. 1).

It should be noted that the external appearance, internal configuration, and electronic circuit connection configuration, etc. of the aerosol generation device 1 envisaged by the present embodiment are all the same as in Embodiment 1.

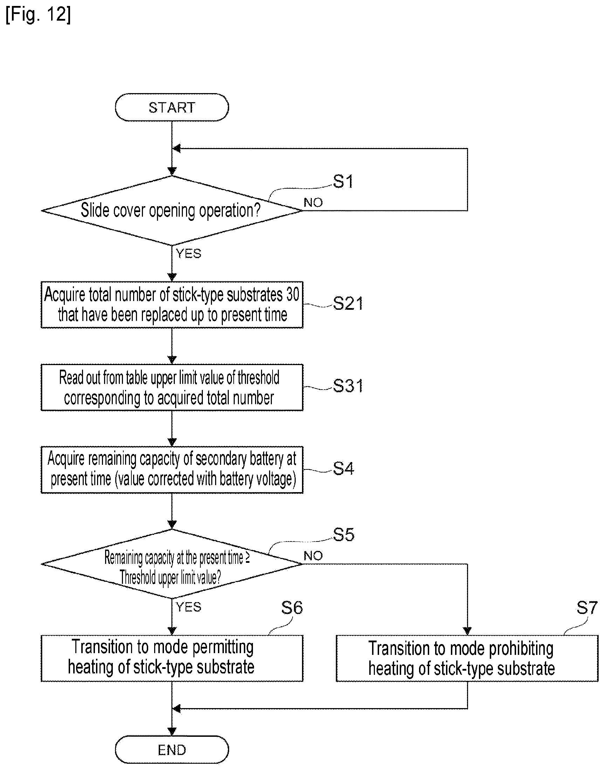

Fig. 12 is a flowchart illustrating last-stick determination processing performed by the aerosol generation device 1 of Embodiment 4. Corresponding reference signs are given in fig. 12 for parts which correspond to those of fig. 11.

In the present embodiment also, the MCU 201 determines whether or not an operation to open the slide cover 20 (see fig. 2) has been detected (step 1), and the MCU 201 acquires the total number of stick-type substrates that have been replaced up to the present time when an opening operation has been detected (step 21).

The MCU 201 then reads out from a table the upper limit value of the threshold corresponding to the acquired total number (step 31).

As discussed hereinabove, the table as referred to here records the relationship between the total number of replaced stick-type substrates 30 and the last-stick determination threshold. The table is stored in the non-volatile memory unit 104, for example.

It should be noted that when the acquired total number is not in the table, a threshold calculated by means of an interpolation computation will be used.

The subsequent processing operations are the same as in fig. 11.

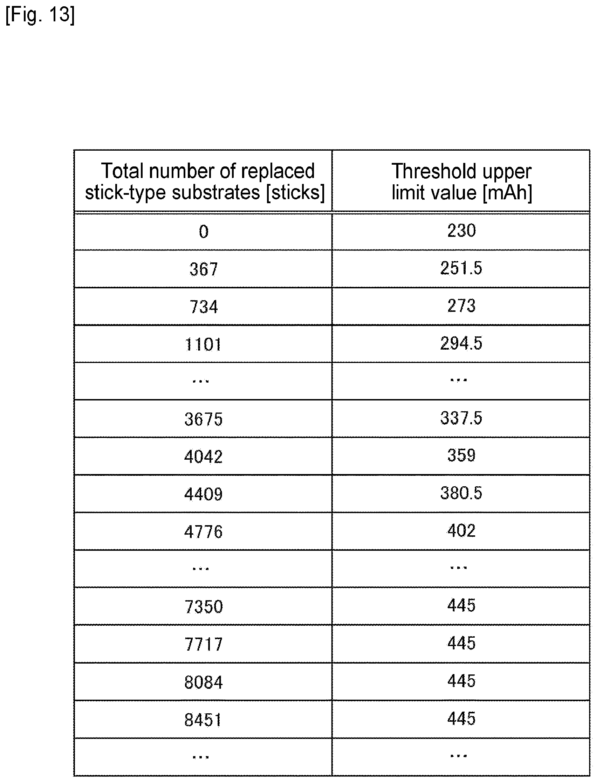

Fig. 13 is a diagram showing an example of the table used in step 31. The total number of replaced stick-type substrates 30 is arranged at approximately equal intervals in the left-hand column of the table shown in fig. 13, and numerical values providing the upper limit value of the corresponding threshold are arranged in the right-hand column of the table. In the case of fig. 13, when the total number increases by 367, the upper limit value of the threshold varies by 21.4 or 21.5 mAh.

It should be noted that the steps between the total numbers prepared in the table may be steps of one or steps of ten.

### <Advantageous Effects>

The aerosol generation device 1 according to the present embodiment differs from Embodiment 3 in that the last-stick determination threshold is read out from a table, but the correction of the last-stick determination threshold in accordance with the total number of replaced stick-type substrates 30 is the same as in Embodiment 1.

Accordingly, in the same way as in Embodiment 3, the smaller the amount of deterioration of the secondary battery 203, the greater the increase in the number of stick-type substrates 30 that can be fully used with a single full charge in comparison with an existing device.

### <Embodiment 5>

In the present embodiment, a description will be given of another last-stick determination processing operation performed by the aerosol generation device 1 (see fig. 1).

It should be noted that the external appearance, internal configuration, and electronic circuit connection configuration, etc. of the aerosol generation device 1 envisaged by the present embodiment are all the same as in Embodiment 1.

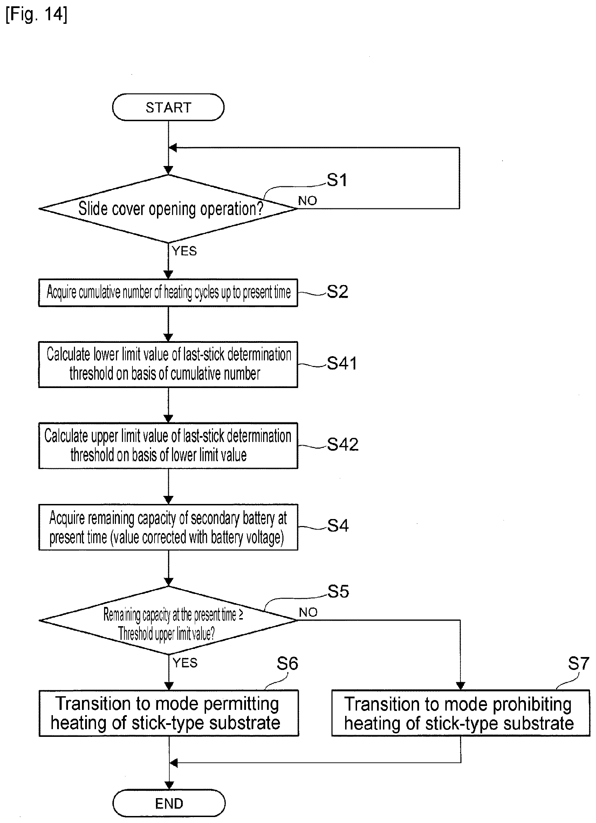

Fig. 14 is a flowchart illustrating last-stick determination processing performed by the aerosol generation device 1 of Embodiment 5. Corresponding reference signs are given in fig. 14 for parts which correspond to those of fig. 7.

In the present embodiment also, the MCU 201 determines whether or not an operation to open the slide cover 20 (see fig. 2) has been detected (step 1), and the MCU 201 acquires the cumulative number of heating cycles up to the present time when an opening operation has been detected (step 2).

The MCU 201 then calculates the lower limit value of the last-stick determination threshold on the basis of the cumulative number (step 41). For example, when the cumulative number is zero, the upper limit value is set at approximately 105 mAh, and when the cumulative number is 7,350 or more, the upper limit value is set at 320 mAh. Moreover, when the cumulative number is between zero and 7,350, the upper limit value is calculated as an intermediate value between 105 mAh and 320 mAh by means of linear interpolation.

The MCU 201 then calculates the upper limit value of the last-stick determination threshold on the basis of the lower limit value (step 42). Specifically, the MCU 201 adds a predetermined value to the lower limit value calculated in step 41 (the predetermined value being an added value comprising the capacity required to fully use one unused stick-type substrate 30 (see fig. 3) plus a margin). Here, 125 mAh is used as the value added to the lower limit value.

The subsequent processing operations are the same as in fig. 7.

### <Advantageous Effects>

The aerosol generation device 1 according to the present embodiment differs from Embodiment 1 in that the last-stick determination upper limit value is calculated using the lower limit value, but the use of a threshold commensurate with the cumulative number of heating cycles in the last-stick determination is the same as in Embodiment 1.

Accordingly, in the same way as in Embodiment 1, the smaller the amount of deterioration of the secondary battery 203, the greater the increase in the number of stick-type substrates 30 that can be fully used with a single full charge in comparison with an existing device.

### <Embodiment 6>

In the present embodiment, a description will be given of another last-stick determination processing operation performed by the aerosol generation device 1 (see fig. 1).

It should be noted that the external appearance, internal configuration, and electronic circuit connection configuration, etc. of the aerosol generation device 1 envisaged by the present embodiment are all the same as in Embodiment 1.

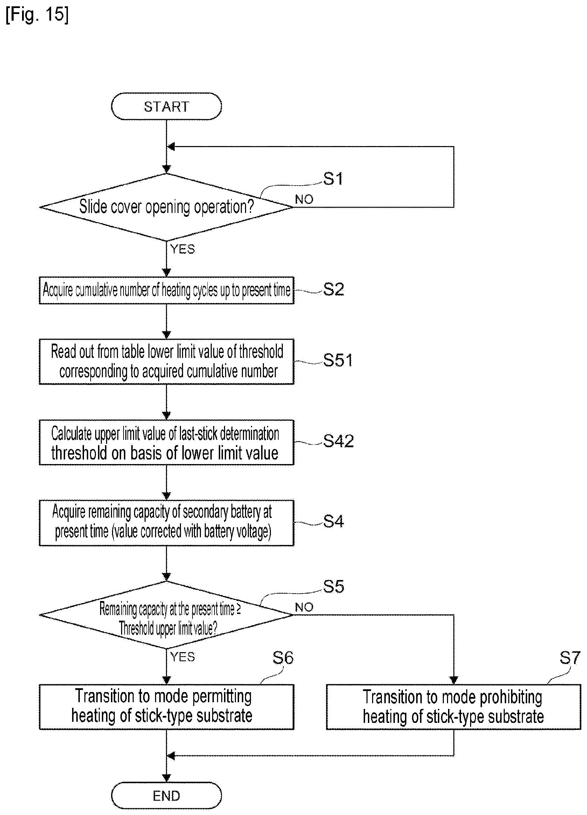

Fig. 15 is a flowchart illustrating last-stick determination processing performed by the aerosol generation device 1 of Embodiment 6. Corresponding reference signs are given in fig. 15 for parts which correspond to those of fig. 14.

In the present embodiment also, the MCU 201 determines whether or not an operation to open the slide cover 20 (see fig. 2) has been detected (step 1), and the MCU 201 acquires the cumulative number of heating cycles up to the present time when an opening operation has been detected (step 2).

The MCU 201 then reads out from a table the lower limit value of the threshold corresponding to the acquired cumulative number (step 51).

The table as referred to here is a table recording relationships between the cumulative number of heating cycles and the last-stick determination threshold, and is stored in the non-volatile memory unit 104, for example.

It should be noted that when the acquired cumulative number is not in the table, a threshold calculated by means of an interpolation computation will be used.

The subsequent processing operations are the same as in fig. 14.

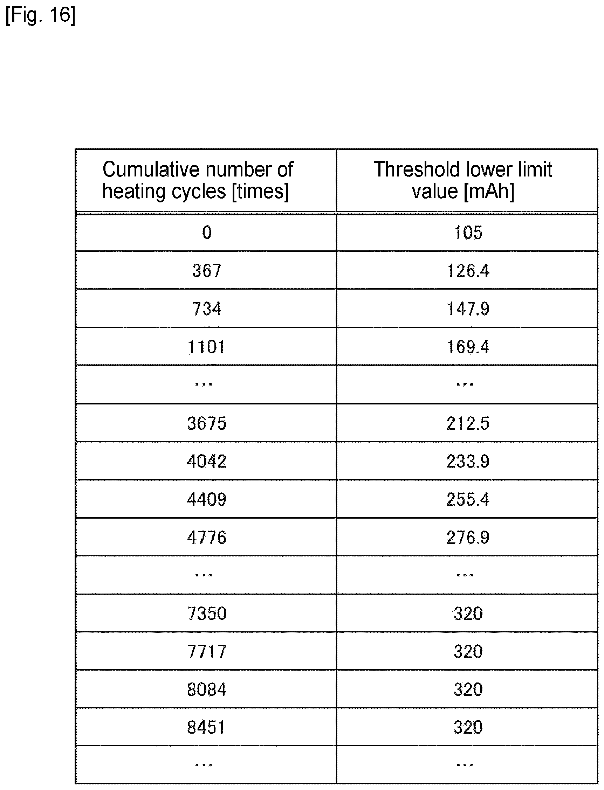

Fig. 16 is a diagram showing an example of the table used in step 51. The cumulative number of heating cycles is arranged at approximately equal intervals in the left-hand column of the table shown in fig. 16, and numerical values providing the lower limit value of the corresponding threshold are arranged in the right-hand column of the table. In the case of fig. 16, when the cumulative number increases by 367, the lower limit value of the threshold varies by 21.4 or 21.5 mAh.

It should be noted that the steps between the cumulative numbers prepared in the table may be steps of one or steps of ten. Moreover, in the table shown in fig. 16, the upper limit of the last-stick determination threshold may be recorded in association with the cumulative number of heating cycles. Step 42 can be omitted when using a table in which the upper limit values are recorded.

### <Advantageous Effects>

The aerosol generation device 1 according to the present embodiment differs from Embodiment 1 in that the last-stick determination threshold is read out from a table, but the correction of the last-stick determination threshold in accordance with the cumulative number of heating cycles is the same as in Embodiment 1.

Accordingly, in the same way as in Embodiment 1, the smaller the amount of deterioration of the secondary battery 203, the greater the increase in the number of stick-type substrates 30 that can be fully used with a single full charge in comparison with an existing device.

### <Embodiment 7>

In the present embodiment, a description will be given of another last-stick determination processing operation performed by the aerosol generation device 1 (see fig. 1).

In the present embodiment, the last-stick determination threshold is corrected in accordance with the total number of stick-type substrates 30 (see fig. 3) that have been replaced up to the present time.

It should be noted that the external appearance, internal configuration, and electronic circuit connection configuration, etc. of the aerosol generation device 1 envisaged by the present embodiment are all the same as in Embodiment 1.

In the present embodiment, unlike in Embodiment 3, attention is paid to the lower limit value of the threshold in fig. 10.

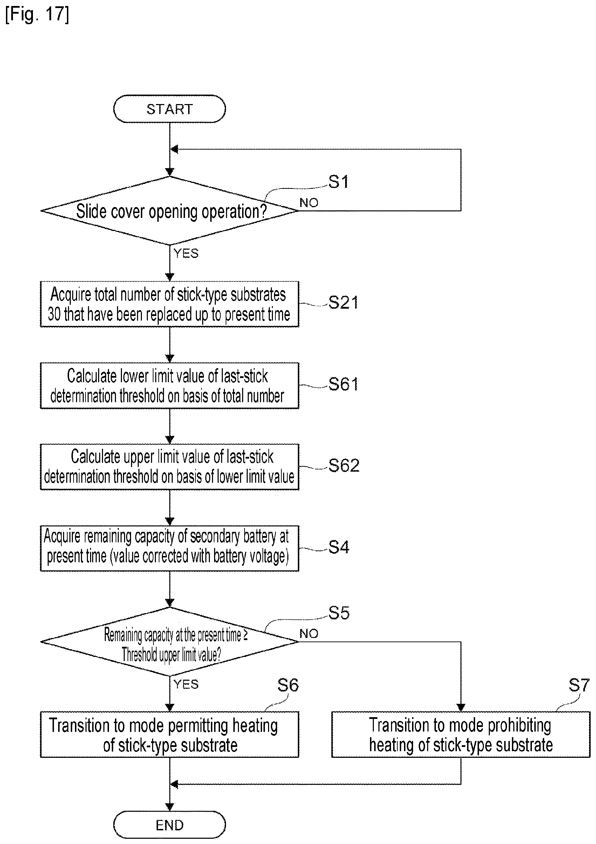

Fig. 17 is a flowchart illustrating last-stick determination processing performed by the aerosol generation device 1 of Embodiment 7. Corresponding reference signs are given in fig. 17 for parts which correspond to those of fig. 11.

The processing operations shown in fig. 17 are also implemented by the MCU 201 (see fig. 4).

In the present embodiment also, the MCU 201 determines whether or not an operation to open the slide cover 20 (see fig. 2) has been detected (step 1), and the MCU 201 acquires the total number of stick-type substrates 30 that have been replaced up to the present time when an opening operation has been detected (step 21).

The MCU 201 then calculates the lower limit value of the last-stick determination threshold on the basis of the total number (step 61). For example, when the total number is zero, the lower limit value is set at 105 mAh, and when the total number is 7,350 or more, the lower limit value is set at 320 mAh. Moreover, when the total number is between zero and 7,350, the lower limit value is calculated as an intermediate value between 105 mAh and 320 mAh by means of linear interpolation.

The MCU 201 then calculates the upper limit value of the last-stick determination threshold on the basis of the lower limit value (step 62).

The subsequent processing operations are the same as in fig. 14.

### <Advantageous Effects>

The aerosol generation device 1 according to the present embodiment differs from Embodiment 3 in that the last-stick determination threshold is corrected using the total number of stick-type substrates 30 replaced up to the present time, but the correction of the threshold in accordance with the progress of deterioration of the secondary battery 203 is the same as in Embodiment 3.

Accordingly, in the same way as in Embodiment 3, the smaller the amount of deterioration of the secondary battery 203, the greater the increase in the number of stick-type substrates 30 that can be fully used with a single full charge in comparison with an existing device.

### <Embodiment 8>

In the present embodiment, a table recording a relationship between the total number of stick-type substrates 30 that have been replaced up to the present time and the last-stick determination threshold is prepared in the aerosol generation device 1 (see fig. 1).

It should be noted that the external appearance, internal configuration, and electronic circuit connection configuration, etc. of the aerosol generation device 1 envisaged by the present embodiment are all the same as in Embodiment 1.

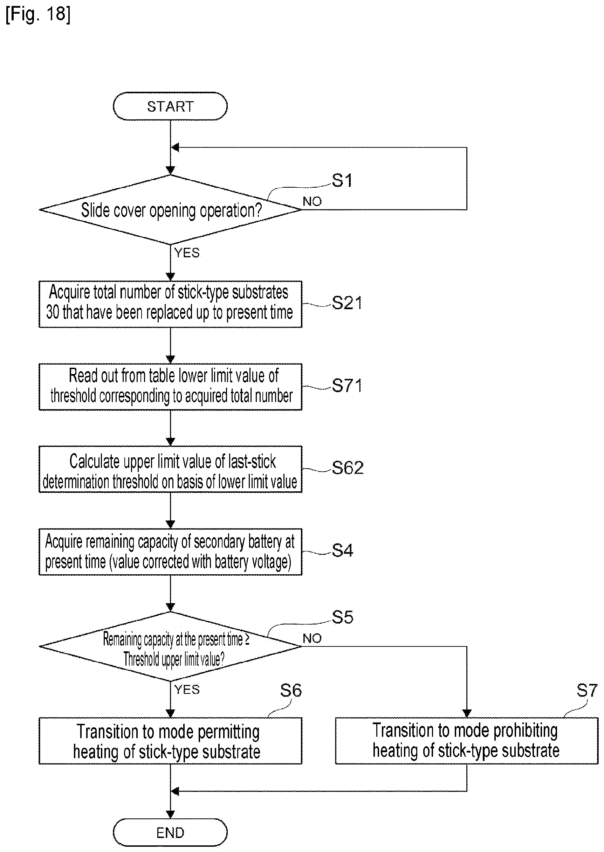

Fig. 18 is a flowchart illustrating last-stick determination processing performed by the aerosol generation device 1 of Embodiment 8. Corresponding reference signs are given in fig. 18 for parts which correspond to those of fig. 12.

In the present embodiment also, the MCU 201 determines whether or not an operation to open the slide cover 20 (see fig. 2) has been detected (step 1), and the MCU 201 acquires the total number of stick-type substrates that have been replaced up to the present time when an opening operation has been detected (step 21).

The MCU 201 then reads out from a table the lower limit value of the threshold corresponding to the acquired total number (step 71).

As discussed hereinabove, the table as referred to here records the relationship between the total number of replaced stick-type substrates 30 and the last-stick determination threshold. The table is stored in the non-volatile memory unit 104, for example.

It should be noted that when the acquired total number is not in the table, a threshold calculated by means of an interpolation computation will be used.

The subsequent processing operations are the same as in fig. 17.

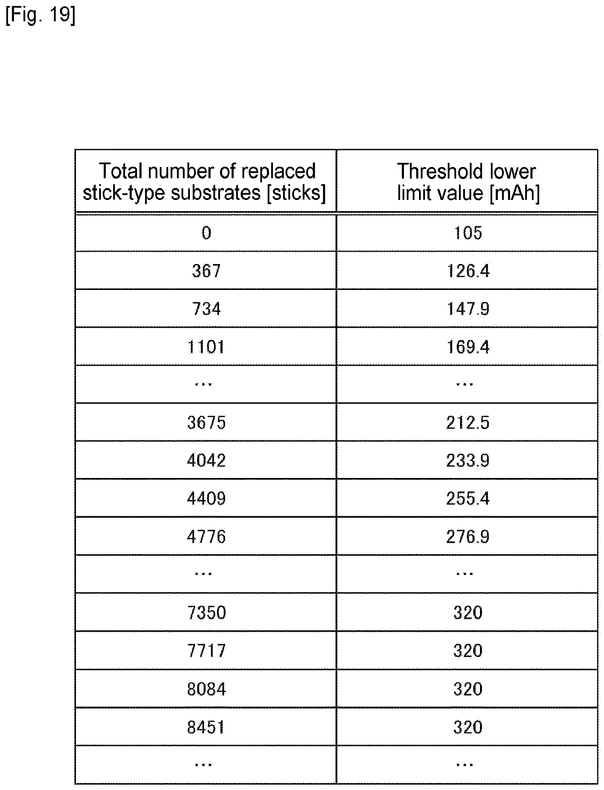

Fig. 19 is a diagram showing an example of the table used in step 71. The total number of replaced stick-type substrates 30 is arranged at approximately equal intervals in the left-hand column of the table shown in fig. 19, and numerical values providing the lower limit value of the corresponding threshold are arranged in the right-hand column of the table. In the case of fig. 13, when the total number increases by 367, the lower limit value of the threshold varies by 21.4 or 21.5 mAh.

It should be noted that the steps between the total numbers prepared in the table may be steps of one or steps of ten.

### <Advantageous Effects>

The aerosol generation device 1 according to the present embodiment differs from Embodiment 3 in that the last-stick determination threshold is read out from a table, but the correction of the last-stick determination threshold in accordance with the total number of replaced stick-type substrates 30 is the same as in Embodiment 1.

Accordingly, in the same way as in Embodiment 3, the smaller the amount of deterioration of the secondary battery 203, the greater the increase in the number of stick-type substrates 30 that can be fully used with a single full charge in comparison with an existing device.

### <Other Embodiments>

(1) Embodiments of the present disclosure were described above, but the technical scope of the present disclosure is not limited to the scope disclosed in the embodiments above. It will be obvious from the disclosure of the claims that the technical scope of the present disclosure also includes various modifications or improvements made to the embodiments above.
(2) In the embodiments discussed hereinabove, a case in which the stick-type substrate 30 is replaced after each heating cycle has been described, but multiple heating cycles may be performed for a single stick-type substrate 30. For example, two heating cycles may be performed for one stick-type substrate 30.
(3) In the embodiments discussed hereinabove, a case is envisaged in which one type of stick-type substrate 30 is inserted into the aerosol generation device 1, but a case can be envisaged in which multiple types of stick-type substrates 30 having different numbers of heating cycles are installed. For example, a case may be envisaged in which a stick-type substrate 30 that needs to be replaced each time one heating cycle is performed and a stick-type substrate 30 that needs to be replaced each time two heating cycles are performed are installed in the aerosol generation device 1.
   In an aerosol generation device 1 in which any one of a plurality of types of stick-type substrates 30 is randomly installed, highly accurate last-stick determination can be achieved by adopting the last-stick determination threshold correction technique described in Embodiments 1 and 2.
(4) In the embodiments discussed hereinabove, the last-stick determination threshold is increased linearly as deterioration of the secondary battery 203 progresses, but this increase is not limited to a linear form. For example, the increase in the threshold accompanying progression of deterioration may equally be expressed by a non-linear simple increasing function. Furthermore, the threshold may be increased stepwise as deterioration progresses.
(5) In the embodiments discussed hereinabove, the remaining capacity at the point in time when the output voltage of the secondary battery 203 with an SOH of 100% decreased to the guaranteed operating voltage was defined as the initial value of the lower limit value of the threshold, but the initial value providing the lower limit value of the threshold may be defined for a largely undeteriorated secondary battery 203, and the SOH need not be 100%.
(6) In the embodiments discussed hereinabove, the remaining capacity at the point in time when the output voltage of the secondary battery 203 with an SOH of 100% decreased to the guaranteed operating voltage was defined as the initial value of the lower limit value of the threshold, but a value obtained by adding a margin to the remaining capacity at the point in time when the output voltage of the secondary battery 203 with an SOH of 100% decreased to the guaranteed operating voltage may equally be used.
(7) In Embodiments 1 and 2 discussed hereinabove, the cumulative number of heating cycles up to the present time is used to correct the last-stick determination threshold, and in Embodiments 3 and 4 discussed hereinabove a case was described in which the last-stick determination threshold was corrected using the total number of stick-type substrates 30 that have been replaced up to the present time, but the last-stick determination threshold may be corrected on the basis of the cumulative number of heating cycles of the secondary battery 203. It should be noted that one cycle refers to discharge from the fully charged state until the remaining capacity is approximately 0 mAh. However, the charging operation of the secondary battery 203 may be counted as one cycle.

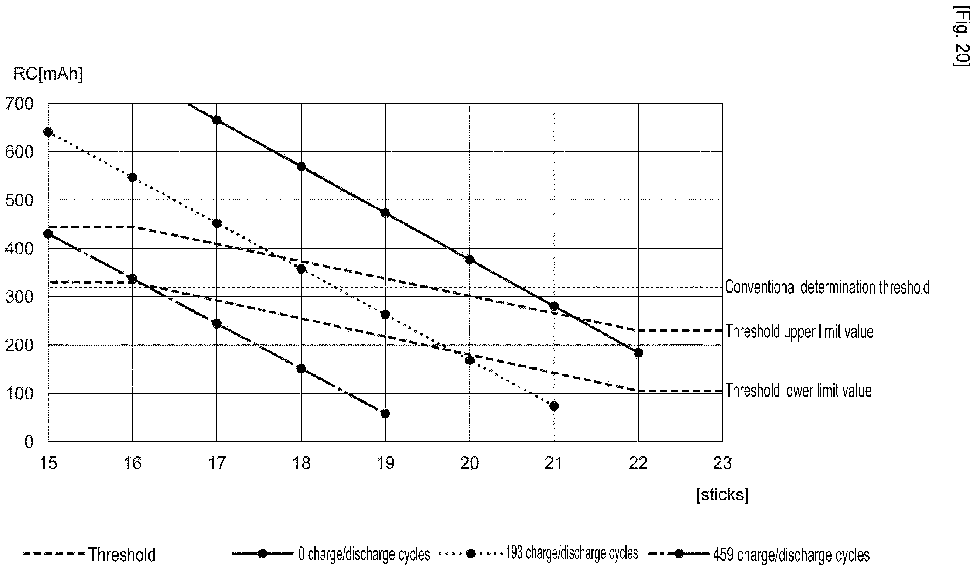

Fig. 20 is a diagram illustrating the threshold used to determine whether or not the secondary battery 203 has the remaining capacity needed in order to fully use one unused stick-type substrate 30. Corresponding reference signs are given in fig. 20 for parts which correspond to those of fig. 6 and 10.

Fig. 20 differs from fig. 6 and fig. 10 in that a plurality of straight lines illustrating changes in the remaining capacity as the number of charge/discharge cycles of the secondary battery 203 increases are drawn.

Zero charge/discharge cycles in fig. 20 correspond to zero heating cycles in fig. 6. Also, zero charge/discharge cycles in fig. 20 correspond to zero replaced stick-type substrates 30 in fig. 10.

193 charge/discharge cycles in fig. 20 correspond to 3,675 heating cycles in fig. 6. Also, 193 charge/discharge cycles in fig. 20 correspond to 3,675 replaced stick-type substrates 30 in fig. 10.

459 charge/discharge cycles in fig. 20 correspond to 7,350 heating cycles in fig. 6. Also, 459 charge/discharge cycles in fig. 20 correspond to 7,350 replaced stick-type substrates 30 in fig. 10.

Even if the last-stick determination threshold is corrected on the basis of the relationship illustrated in fig. 20, the smaller the amount of deterioration of the secondary battery 203, the greater the increase in the number of stick-type substrates 30 that can be fully used with a single full charge in comparison with an existing device, in the same way as the embodiments discussed hereinabove.

It should be noted that the table may be used as described in embodiments 2 and 4 to correct the last-stick determination threshold in accordance with the cumulative number of charge/discharge cycles. In the last-stick determination processing, "heating cycle" in the flow chart shown in fig. 7, for example, should be replaced with "charge/discharge cycle".

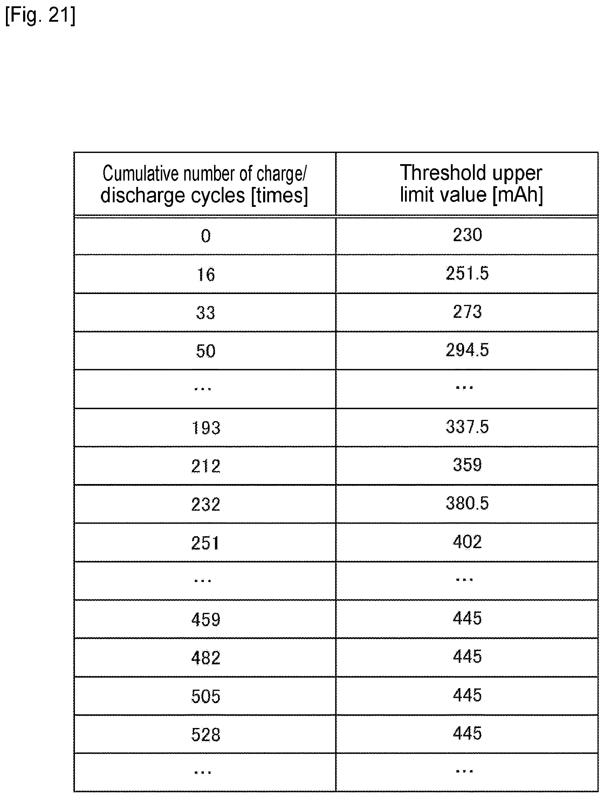

Fig. 21 is a diagram illustrating a table recording a relationship between the cumulative number of charge/discharge cycles and the corresponding last-stick determination threshold.

In the table shown in fig. 21, a relationship between the threshold graph shown in fig. 20 and the cumulative number of charge/discharge cycles is recorded.

The last-stick determination threshold may be corrected using the table shown in fig. 21. Moreover, the table shown in fig. 21 may equally record the lower limit value of the threshold in association with the cumulative number of charge/discharge cycles. In the last-stick determination processing, "heating cycle" in the flow chart shown in fig. 15, for example, should be replaced with "charge/discharge cycle".

(8) The embodiments discussed hereinabove described a case in which the aerosol source is a solid, but the aerosol source may equally be a liquid. When the aerosol source is a liquid, a system is adopted in which the aerosol source is guided to a narrow tube known as a wick by using the capillary phenomenon, and a coil wound around the wick is heated to thereby vaporize the aerosol source.

It should be noted that when the aerosol source is a liquid, the aerosol source is heated in response to detection of inhalation, instead of using the control profile shown in fig. 5.

That is to say, the aerosol source is heated when the sensor unit 102 (see fig. 3) detects inhalation by the user. However, an upper limit (e.g., 2.5 seconds) is provided for the length of the heating time for one inhalation, and even if inhalation continues beyond the upper limit, heating of the aerosol source is stopped at the time when the upper limit is reached.

Moreover, a preheating period may also be provided for heating of a liquid aerosol source. In the case of a liquid aerosol source, however, the target temperature in the preheating period is set at a lower temperature than the boiling point of the aerosol source. Providing a preheating period so that the temperature of the liquid is raised beforehand reduces the temperature change until the aerosol source reaches the boiling point. An aerosol can therefore be generated immediately after inhalation without delay, even with a low air temperature in the usage environment of the aerosol generation device.

(9) The embodiments discussed hereinabove described an aerosol generation device which generates an aerosol by heating a solid aerosol source, but the aerosol generation device may equally generate an aerosol by separately heating each of a solid aerosol source and a liquid aerosol source. An aerosol generation device of this type is also referred to as a hybrid aerosol generation device.

### <Summary>

It should be noted that the present disclosure includes the following features.
(1) An aerosol generation device comprising a control unit, a secondary battery, and a heating unit for heating an aerosol source, wherein the control unit varies, in accordance with the cumulative number of heating cycles since the start of use of the aerosol generation device, a threshold used to determine whether or not there is remaining capacity enabling one unused aerosol source to be fully used.
(2) The aerosol generation device as disclosed in (1), wherein the threshold increases as the cumulative number increases.
(3) The aerosol generation device as disclosed in (2), wherein the threshold increases linearly as the cumulative number increases.
(4) The aerosol generation device as disclosed in any one of (1) to (3), wherein an initial value of the threshold is defined by the remaining capacity enabling the secondary battery in a largely undeteriorated state to generate a guaranteed operating voltage of the aerosol generation device.
(5) The aerosol generation device as disclosed in any one of (1) to (4), wherein the control unit stores the calculated cumulative number in a non-volatile memory unit.
(6) The aerosol generation device as disclosed in any one of (1) to (4), wherein the control unit varies the threshold in accordance with the total number of aerosol sources replaced after the start of use of the aerosol generation device, the total number corresponding to the cumulative number.
(7) The aerosol generation device as disclosed in any one of (1) to (5), wherein the control unit varies the threshold in accordance with the cumulative number of charge/discharge cycles of the secondary battery corresponding to the cumulative number.
(8) A program for causing a computer, which is provided in an aerosol generation device comprising a secondary battery and a heating unit for heating an aerosol source, to implement: a function for varying, in accordance with the cumulative number of heating cycles since the start of use of the aerosol generation device, a threshold used to determine whether or not there is remaining capacity enabling one unused aerosol source to be fully used; a function for determining whether or not the remaining capacity of the secondary battery at the present time is above the threshold; a function for permitting heating of the aerosol source by the heating unit when the remaining capacity of the secondary battery at the present time is above the threshold; and a function for prohibiting heating of the aerosol source by the heating unit when the remaining capacity of the secondary battery at the present time is below the threshold.

### REFERENCE SIGNS LIST

1... Aerosol generation device; 10... Main body device; 11... Power button; 12... LED lamp; 13... Stick-type substrate insertion port; 14... USB cable insertion port; 20... Slide cover; 101... Power source unit; 102... Sensor unit; 103... Notification unit; 104... Memory unit; 105... Communication unit; 106... Control unit; 107... Heating unit; 108... Heat insulating portion; 109... Holding portion; 30... Stick-type substrate; 201... MCU; 202... Heating coil; 203... Secondary battery; 204... Charging IC; 205... Battery protection IC; 206... Remaining capacity meter IC; 207... Step-up/step-down DC/DC circuit; 208... Step-up DC/DC circuit; 209, 210... Switch

## Claims

1. An aerosol generation device comprising a control unit, a secondary battery, and a heating unit for heating an aerosol source, wherein
the control unit varies, in accordance with the cumulative number of heating cycles since the start of use of the aerosol generation device, a threshold used to determine whether or not there is remaining capacity enabling one unused aerosol source to be fully used.

2. The aerosol generation device as claimed in claim 1, wherein the threshold increases as the cumulative number increases.

3. The aerosol generation device as claimed in claim 2, wherein the threshold increases linearly as the cumulative number increases.

4. The aerosol generation device as claimed in any one of claims 1 to 3, wherein an initial value of the threshold is defined by the remaining capacity enabling the secondary battery in a largely undeteriorated state to generate a guaranteed operating voltage of the aerosol generation device.

5. The aerosol generation device as claimed in any one of claims 1 to 4, wherein the control unit stores the calculated cumulative number in a non-volatile memory unit.

6. The aerosol generation device as claimed in any one of claims 1 to 5, wherein the control unit varies the threshold in accordance with the total number of aerosol sources replaced after the start of use of the aerosol generation device, the total number corresponding to the cumulative number.

7. The aerosol generation device as claimed in any one of claims 1 to 5, wherein the control unit varies the threshold in accordance with the cumulative number of charge/discharge cycles of the secondary battery corresponding to the cumulative number.

8. A program for causing a computer, which is provided in an aerosol generation device comprising a secondary battery and a heating unit for heating an aerosol source, to implement:
a function for varying, in accordance with the cumulative number of heating cycles since the start of use of the aerosol generation device, a threshold used to determine whether or not there is remaining capacity enabling one unused aerosol source to be fully used;
a function for determining whether or not the remaining capacity of the secondary battery at the present time is above the threshold,
a function for permitting heating of the aerosol source by the heating unit when the remaining capacity of the secondary battery at the present time is above the threshold; and
a function for prohibiting heating of the aerosol source by the heating unit when the remaining capacity of the secondary battery at the present time is below the threshold.
